# EUROPEAN PATENT APPLICATION

(11) **EP 4 815 579 A1**
(43) Date of publication of application: **30.09.2026**
(21) Application number: 24893153.7
(22) Date of filing: 25.10.2024
(51) Int. Cl.: H04W 56/00

(54) **SENSING SIGNAL TRANSMISSION METHOD AND DEVICE**

(30) Priority: 23.11.2023 CN 202311579939
(71) Applicant: Datang Mobile Communications Equipment Co., Ltd., Beijing 100085 (CN)
(72) Inventor: WANG, Junwei, Beijing 100085 (CN)
(74) Representative: Studio Torta S.p.A.
(86) International application number: PCT/CN2024/127429
(87) International publication number: WO 2025/107995

(57) **Abstract**

Embodiments of the present disclosure provide a sensing signal transmission method and device. The method comprises: determining resource information of a sensing signal, wherein the resource information comprises at least one of the following: the start time of the sensing signal, the number of temporal units of the sensing signal, and the length of a first blank temporal unit after the temporal unit of the sensing signal, and the first blank temporal unit is used for at least one of the following: switching between transmitting and receiving, and receiving an echo signal of the sensing signal; and transmitting the sensing signal on the basis of the resource information.

## Description

### CROSS-REFERENCES TO RELATED APPLICATIONS

The present application claims priority to Chinese Patent Application No. 2023115799393, filed on November 23, 2023, entitled "Sensing Signal Transmission Method and Device", which is hereby incorporated by reference in its entirety.

### FIELD

The present application relates to the field of communications, and in particular, to a method and an apparatus for sensing signal transmission.

### BACKGROUND

A frame structure of communication and sensing fusion is a frame structure of communication sensing time-division, that is, sensing or communication functions are implemented in different slots or symbols.

A current frame structure design of a sensing signal is only suitable for a pure bistatic mode. When applied to a monostatic mode or a hybrid mode of monostatic and bistatic, the sensing signal cannot be transmitted and received normally, resulting in a decrease in sensing performance.

### BRIEF SUMMARY

Embodiments of the present application provide a method and an apparatus for sensing signal transmission to address a shortcoming of a decrease in sensing performance in related art and improve sensing performance.

An embodiment of the present application provides a method for sensing signal transmission, performed by a first communication device, including:
determining resource information of a sensing signal, where the resource information includes at least one of following: a start time of the sensing signal, a number of time units occupied by the sensing signal, or a length of a first blank time unit after the sensing signal; the first blank time unit is used for at least one of following: switching from transmitting to receiving, or, receiving an echo signal of the sensing signal; and
transmitting the sensing signal based on the resource information.

In an embodiment, the method further includes:
receiving the echo signal of the sensing signal within the first blank time unit.

In an embodiment, the method further includes:
obtaining a first timing advance (TA) of the sensing signal; and/or,
obtaining a length of a second blank time unit before the time units occupied by the sensing signal.

In an embodiment, in case that the first communication device includes a terminal, obtaining the first TA of the sensing signal includes:
receiving TA information sent from a network side device, and determining the first TA of the sensing signal based on the TA information;
where the TA information includes one or more of following:
   the first TA;
   a second TA used to transmit a message or data; or
   a timing advance offset, where the timing advance offset is an offset of the first TA relative to the second TA.

In an embodiment, in case that the first communication device includes a terminal, determining the resource information of the sensing signal includes:
receiving resource configuration information of the sensing signal sent from a network side device; and
determining the resource information of the sensing signal based on the resource configuration information.

In an embodiment, determining the resource information of the sensing signal includes:
in case of determining the number of time units occupied by the sensing signal to be greater than 1 based on the resource configuration information, determining the length of the first blank time unit to be 0.

In an embodiment, determining the resource information of the sensing signal includes:
in case of determining the length of the first blank time unit to be greater than 0 based on the resource configuration information, determining the number of time units occupied by the sensing signal to be 1.

In an embodiment, in case that the first communication device includes a terminal, the method further includes:
determining whether to transmit a message or data within the time units occupied by the sensing signal.

In an embodiment, determining whether to transmit the message or data within the time units occupied by the sensing signal includes:
determining whether to transmit the message or data within the time units occupied by the sensing signal based on the first TA and a second TA.

In an embodiment, determining whether to transmit the message or data within the time units occupied by the sensing signal based on the first TA and the second TA includes one or more of following:
in case that an absolute value of a difference between the first TA and the second TA is less than or equal to a predetermined threshold, determining to transmit the message or data within the time units occupied by the sensing signal; or
in case that an absolute value of a difference between the first TA and a first value is less than or equal to a predetermined threshold, determining to transmit the message or data within the time units occupied by the sensing signal, where the first value is calculated based on the second TA.

In an embodiment, in case that the first communication device includes a first network side device and a receiving node of the sensing signal includes the first network side device or a second network side device, the method further includes:
before transmitting the sensing signal, determining whether the time units occupied by the sensing signal belong to uplink time units or downlink time units.

In an embodiment, determining whether the time units occupied by the sensing signal belong to the uplink time units or the downlink time units includes:
based on a predefined protocol, determining that the time units occupied by the sensing signal belong to the downlink time units; or
based on attribute indication information, determining that the time units occupied by the sensing signal belong to the uplink time units and/or the downlink time units.

In an embodiment, the length of the second blank time unit is an integer multiple of a length of a time unit;
and/or,
a sum of the length of the second blank time unit and the length of the first blank time unit is an integer multiple of a length of a time unit.

In an embodiment, in case that the length of the second blank time unit is not an integer multiple of a length of a time unit, the time units occupied by the sensing signal are not used for transmitting or receiving a message or data.

In an embodiment, in case that the first communication device includes a terminal, the method further includes:
transmitting a message or data within the time units occupied by the sensing signal.

In an embodiment, the method further includes:
obtaining a feature parameter or model parameter of a sensed object; and
in case that a measurement quantity contained in a received sensing signal matches the feature parameter or model parameter of the sensed object, transmitting the measurement quantity.

An embodiment of the present application further provides a method for sensing signal transmission, performed by a second communication device, including:
determining resource information of a sensing signal, where the resource information includes at least one of following: a start time of the sensing signal, a number of time units occupied by the sensing signal, or a length of a first blank time unit after the sensing signal; and
receiving the sensing signal based on the resource information.

In an embodiment, the method further includes:
obtaining a length of a second blank time unit before the time units occupied by the sensing signal.

In an embodiment, the method further includes:
not receiving a message or data within the first blank time unit or a second blank time unit.

In an embodiment, in case that the second communication device includes a terminal, the method further includes:
receiving a message or data within the time units occupied by the sensing signal.

In an embodiment, determining the resource information of the sensing signal includes:
receiving resource configuration information of the sensing signal sent from a network side device; and
determining the resource information of the sensing signal based on the resource configuration information.

In an embodiment, determining the resource information of the sensing signal includes:
in case of determining the number of time units occupied by the sensing signal to be greater than 1 based on the resource configuration information, determining the length of the first blank time unit to be 0.

In an embodiment, determining the resource information of the sensing signal includes:
in case of determining the length of the first blank time unit to be greater than 0 based on the resource configuration information, determining the number of time units occupied by the sensing signal to be 1.

In an embodiment, the length of the second blank time unit is an integer multiple of a length of a time unit;
and/or,
a sum of the length of the second blank time unit and the length of the first blank time unit is an integer multiple of a length of a time unit.

In an embodiment, in case that the length of the second blank time unit is not an integer multiple of a length of a time unit, the time units occupied by the sensing signal are not used for transmitting or receiving a message or data.

In an embodiment, the method further includes:
obtaining a feature parameter or model parameter of a sensed object; and
in case that a measurement quantity contained in a received sensing signal matches the feature parameter or model parameter of the sensed object, transmitting the measurement quantity.

An embodiment of the present application further provides a first communication device, including: a memory, a transceiver, and a processor;
where the memory is used for storing a computer program; the transceiver is used for receiving and transmitting data under control of the processor; and the processor is used for reading the computer program in the memory and implementing the steps of the method for sensing signal transmission described above.

An embodiment of the present application further provides a second communication device, including: a memory, a transceiver, and a processor;
where the memory is used for storing a computer program; the transceiver is used for receiving and transmitting data under control of the processor; and the processor is used for reading the computer program in the memory and implementing the steps of the method for sensing signal transmission described above.

An embodiment of the present application further provides an apparatus for sensing signal transmission, including:
a first determining module, used for determining resource information of a sensing signal, where the resource information includes at least one of following: a start time of the sensing signal, a number of time units occupied by the sensing signal, or a length of a first blank time unit after the sensing signal; the first blank time unit is used for at least one of following: switching from transmitting to receiving, or, receiving an echo signal of the sensing signal; and
a first transmitting module, used for transmitting the sensing signal based on the resource information.

In an embodiment, the apparatus further includes:
a second receiving module, used for receiving the echo signal of the sensing signal within the first blank time unit.

In an embodiment, the apparatus further includes a first obtaining module, used for one or more of following:
obtaining a first timing advance (TA) of the sensing signal; and/or,
obtaining a length of a second blank time unit before the time units occupied by the sensing signal.

In an embodiment, in case that the first communication device includes a terminal, the first obtaining module is used for:
receiving TA information sent from a network side device, and determining the first TA of the sensing signal based on the TA information;
where the TA information includes one or more of following:
   the first TA;
   a second TA used to transmit a message or data; or
   a timing advance offset, where the timing advance offset is an offset of the first TA relative to the second TA.

In an embodiment, in case that the first communication device includes a terminal, the first determining module is used for:
receiving resource configuration information of the sensing signal sent from a network side device; and
determining the resource information of the sensing signal based on the resource configuration information.

In an embodiment, the first determining module is used for:
in case of determining the number of time units occupied by the sensing signal to be greater than 1 based on the resource configuration information, determining the length of the first blank time unit to be 0.

In an embodiment, the first determining module is used for:
in case of determining the length of the first blank time unit to be greater than 0 based on the resource configuration information, determining the number of time units occupied by the sensing signal to be 1.

In an embodiment, the apparatus further includes:
a first confirming module, used for, in case that the first communication device includes a terminal, determining whether to transmit the message or data within the time units occupied by the sensing signal.

In an embodiment, the first confirming module is used for:
determining whether to transmit the message or data within the time units occupied by the sensing signal based on the first TA and a second TA.

In an embodiment, the first confirming module is used for one or more of following:
in case that an absolute value of a difference between the first TA and the second TA is less than or equal to a predetermined threshold, determining to transmit the message or data within the time units occupied by the sensing signal; or
in case that an absolute value of a difference between the first TA and a first value is less than or equal to a predetermined threshold, determining to transmit the message or data within the time units occupied by the sensing signal, where the first value is calculated based on the second TA.

In an embodiment, the apparatus further includes:
a third determining module, used for, in case that the first communication device comprises a first network side device and a receiving node of the sensing signal comprises the first network side device or a second network side device, determining whether the time units occupied by the sensing signal belong to uplink time units or downlink time units before transmitting the sensing signal.

In an embodiment, the third determining module is used for:
based on a predefined protocol, determining that the time units occupied by the sensing signal belong to the downlink time units; or
based on attribute indication information, determining that the time units occupied by the sensing signal belong to the uplink time units and/or the downlink time units.

In an embodiment, the length of the second blank time unit is an integer multiple of a length of a time unit;
and/or,
a sum of the length of the second blank time unit and the length of the first blank time unit is an integer multiple of a length of a time unit.

In an embodiment, in case that the length of the second blank time unit is not an integer multiple of a length of a time unit, the time units occupied by the sensing signal are not used for transmitting or receiving a message or data.

In an embodiment, the apparatus further includes:
a second transmitting module, used for, in case that the first communication device includes a terminal, transmitting a message or data within the time units occupied by the sensing signal.

In an embodiment, the apparatus further includes:
a second obtaining module, used for obtaining a feature parameter or model parameter of a sensed object; and
a third transmitting module, used for, in case that a measurement quantity contained in a received sensing signal matches the feature parameter or model parameter of the sensed object, transmitting the measurement quantity.

An embodiment of the present application further provides an apparatus for sensing signal transmission, used in a second communication device, including:
a second determining module, used for determining resource information of a sensing signal, where the resource information includes at least one of following: a start time of the sensing signal, a number of time units occupied by the sensing signal, or a length of a first blank time unit after the sensing signal; and
a first receiving module, used for receiving the sensing signal based on the resource information.

In an embodiment, the apparatus further includes:
a third obtaining module, used for obtaining a length of a second blank time unit before the time units occupied by the sensing signal.

In an embodiment, the apparatus further includes:
a fourth receiving module, used for not receiving a message or data within the first blank time unit or a second blank time unit.

In an embodiment, the apparatus further includes:
a third receiving module, used for, in case that the second communication device includes a terminal, receiving a message or data within the time units occupied by the sensing signal.

In an embodiment, the second determining module is used for:
receiving resource configuration information of the sensing signal sent from a network side device; and
determining the resource information of the sensing signal based on the resource configuration information.

In an embodiment, the second determining module is used for:
in case of determining the number of time units occupied by the sensing signal to be greater than 1 based on the resource configuration information, determining the length of the first blank time unit to be 0.

In an embodiment, the second determining module is used for:
in case of determining the length of the first blank time unit to be greater than 0 based on the resource configuration information, determining the number of time units occupied by the sensing signal to be 1.

In an embodiment, the length of the second blank time unit is an integer multiple of a length of a time unit;
and/or,
a sum of the length of the second blank time unit and the length of the first blank time unit is an integer multiple of a length of a time unit.

In an embodiment, in case that the length of the second blank time unit is not an integer multiple of a length of a time unit, the time units occupied by the sensing signal are not used for transmitting or receiving a message or data.

In an embodiment, the apparatus further includes:
a fourth obtaining module, used for obtaining a feature parameter or model parameter of a sensed object; and
a fourth transmitting module, in case that a measurement quantity contained in a received sensing signal matches the feature parameter or model parameter of the sensed object, used for transmitting the measurement quantity.

An embodiment of the present application provides a processor readable storage medium storing a computer program, where the computer program causes a processor to perform the method for sensing signal transmission described in the first aspect.

An embodiment of the present application provides a processor readable storage medium storing a computer program, where the computer program causes a processor to perform the method for sensing signal transmission described in the second aspect.

According to a method and an apparatus for sensing signal transmission provided by an embodiment of the present application, a length of a first blank time unit is reserved after the time units occupied by the sensing signal, which is used for switching from transmitting to receiving, or, receiving an echo signal of the sensing signal, so that the sensing service in a monostatic mode or a hybrid mode of monostatic and bistatic may be effectively carried out, thereby improving sensing performance.

### BRIEF DESCRIPTION OF THE DRAWINGS

In order to illustrate the solutions disclosed in the embodiments of the present application or the related art more clearly, the drawings used in the description of the embodiments or the related art are briefly described below. The drawings in the following description are only some embodiments of the present application, and other drawings may be obtained according to these drawings without any creative work for those skilled in the art.
FIG. 1 is a schematic diagram of a classification of bistatic sensing and monostatic sensing in the related art;
FIG. 2 is a schematic diagram of a hybrid mode in the related art;
FIG. 3 is a structural schematic diagram of single-column sensing symbols and multi-column sensing symbols in the related art;
FIG. 4 is a schematic diagram of a requirement for a sensing time-domain structure of a monostatic time division mode according to an embodiment of the present application;
FIG. 5 is a schematic diagram of a monostatic partial full duplex mode according to an embodiment of the present application;
FIG. 6 is a schematic diagram of a requirement for a sensing time-domain structure of a monostatic partial full duplex mode according to an embodiment of the present application;
FIG. 7 is a first schematic flowchart of a method for sensing signal transmission according to an embodiment of the present application;
FIG. 8 is a second schematic flowchart of a method for sensing signal transmission according to an embodiment of the present application;
FIG. 9 is a first schematic diagram of a bistatic mode of base station A and base station B according to an embodiment of the present application;
FIG. 10 is a second schematic diagram of a bistatic mode of base station A and base station B according to an embodiment of the present application;
FIG. 11 is a first schematic structural diagram of a hybrid mode of bistatic sensing and monostatic sensing according to an embodiment of the present application;
FIG. 12 is a second schematic structural diagram of a hybrid mode of bistatic sensing and monostatic sensing according to an embodiment of the present application;
FIG. 13 is a schematic diagram of a relative position of timing advance for UE transmitting a sensing signal according to an embodiment of the present application;
FIG. 14 is a third schematic structural diagram of a hybrid mode of bistatic sensing and monostatic sensing according to an embodiment of the present application;
FIG. 15 is a schematic diagram of resources for a sensing signal according to an embodiment of the present application;
FIG. 16 is a structural schematic diagram of a first communication device according to an embodiment of the present application;
FIG. 17 is a structural schematic diagram of a second communication device according to an embodiment of the present application;
FIG. 18 is a first schematic structural diagram of an apparatus for sensing signal transmission according to an embodiment of the present application; and
FIG. 19 is a second schematic structural diagram of an apparatus for sensing signal transmission according to an embodiment of the present application.

### DETAILED DESCRIPTION

In the embodiments of the present application, the term "and/or" describes the association relationship of associated objects, indicating that three relationships may exist. For example, A and/or B may represent three situations: A exists alone, A and B exist at the same time, and B exists alone. The character "/" generally indicates that the previous and next associated objects are in an "or" relationship.

In the embodiments of the application, the term "multiple" refers to two or more, and other quantifiers are similar thereto.

The solutions according to the embodiments of the present application may be applicable to various systems, for example, 5G systems. For example, the applicable system may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

First, introduce the following contents.

In the technical evolution of communication systems, integrated sensing and communication (ISAC) is an important candidate evolutional feature. The sensing procedure is classified into a bistatic sensing mode, a monostatic sensing mode, and a hybrid sensing mode (both bistatic mode and monostatic mode). For different nodes with different sensing capabilities and different sensing modes, there are different formats of sensing resources. The sensing capability here may refer to an ability to receive a reflected signal (or an echo signal).

### (1) ISAC basic concepts;

ISAC (Integrated Sensing and Communication) is an important candidate evolution for communication systems, the basic idea of which is to introduce radio sensing functionality into radio mobile communication. Radio sensing involves sensing environmental information through radio signals. The environmental information includes a distribution, a size, a number, a temperature of objects in the environment, human movements and behaviors, and even human breathing rate, heart rate, etc. The principle of radio sensing is relatively simple: a radio signal is transmitted toward the environment to be sensed, while a receiver collects the radio signals that are reflected, scattered, and transmitted through multiple paths. Since the collected radio signals pass through the environment, they carry information about the environment. After receiving the signals, complex signal processing is performed, the characteristics of the environment may be discovered, and the sensed environment may be reconstructed on the computer, including identifying humans and objects in the environment, detecting temperature, detecting human movements, and even human breathing rate, heart rate, etc. This technology is used in areas such as personnel health monitoring and security.

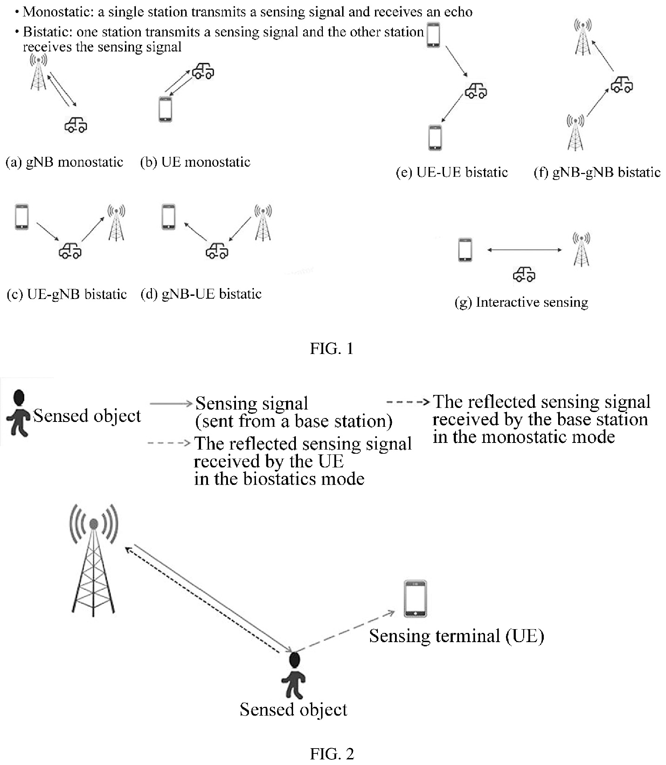

Radio sensing is generally classified into: monostatic sensing and bistatic sensing. FIG. 1 is a schematic diagram of a classification of bistatic sensing and monostatic sensing in the related art. As shown in FIG. 1, The monostatic sensing means that the base station (or terminal) actively transmits a sensing signal. After the sensing signal is reflected by the sensed object, the base station (or terminal) receives the reflected sensing signal. The bistatic sensing means that the base station (or terminal) actively transmits a sensing signal, which passes through the wireless channel and is received by the other terminal (or base station). The monostatic sensing includes: a base station monostatic sensing, and a terminal monostatic sensing. The bistatic sensing includes: UE-UE, gNB-gNB, UE-gNB, and gNB-UE.

In actual deployment scenarios, radio sensing may also include a hybrid sensing mode. FIG. 2 is a schematic diagram of a hybrid mode in the related art. As shown in FIG. 2, the base station transmits a sensing signal. In addition to the sensing terminal receiving and measuring the sensing signal, the base station also receives reflected sensing signal and performs sensing measurements. Finally, the base station (or sensing server) uses the sensing measurement results from the base station and the terminal to determine the final sensing result.

### (2) Sensing signal frame structure;

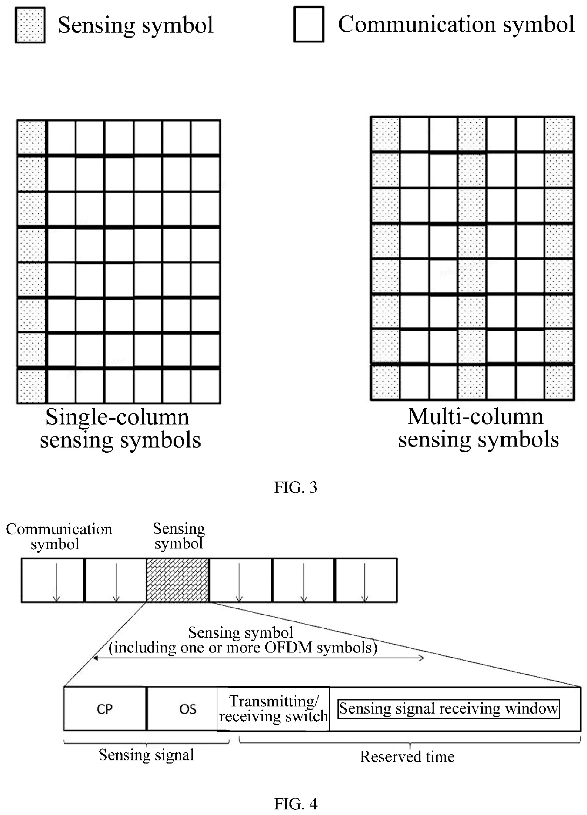

FIG. 3 is a structural schematic diagram of single-column sensing symbols and multi-column sensing symbols in the related art. As shown in FIG. 3, a frame structure of communication sensing fusion is a frame structure of communication sensing time-division, that is, sensing or communication functions are implemented in different slots or symbols. For an overall frame structure, a time-division frame structure maintains a communication frame structure without change, and the structural characteristics of the sensing signal are as follows:
1: Occupy one or more orthogonal frequency division multiplexing (OFDM) symbols.
2: Use a same cyclic prefix (CP) and subcarrier spacing (SCS) as the communication symbols.
3: The sensing and communication symbols adopt the time division multiplexing (TDM) method (with no gaps therebetween).

### (3) A monostatic time division mode (using time division in the procedure of signal transmission and reception);

A monostatic time division mode means that a device cannot receive a sensing signal in case of transmitting the sensing signal. That is, the device enters signal reception mode only after the signal transmission is completed.

FIG. 4 is a schematic diagram of a requirement for a sensing time-domain structure of a monostatic time division mode according to an embodiment of the present application. As shown in FIG. 4, in case of using a monostatic time division mode, time needs to be reserved after the sensing signal, to allow the device to switch between transmitting and receiving and to receive the sensing signal.

### (4) A monostatic partial full duplex mode (transmitting and receiving the signal simultaneously);

Partial full duplex means that in case that a device is in full duplex mode, the receiving time of the sensing signal only overlaps with the transmitting time of the sensing signal in the time domain, and the receiving time of the sensing signal cannot overlap with the communication symbol in the time domain.

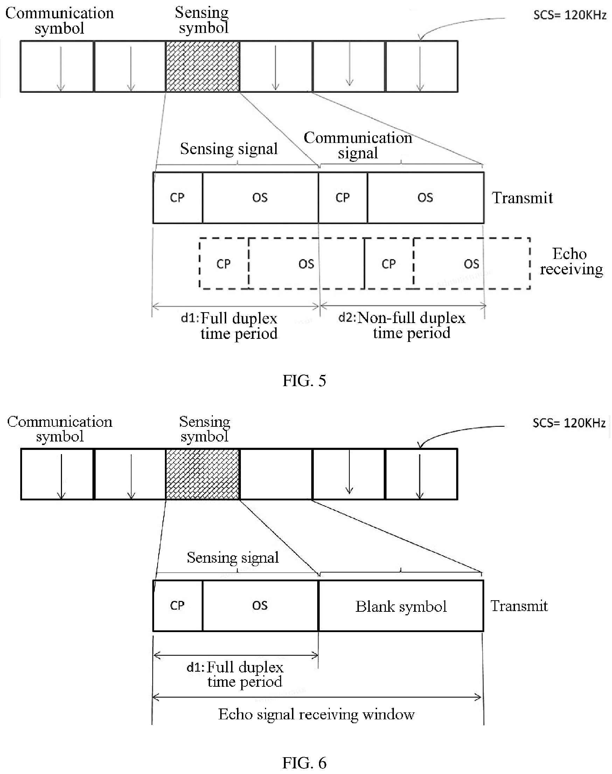

FIG. 5 is a schematic diagram of a monostatic partial full duplex mode according to an embodiment of the present application. As shown in FIG. 5, the device receives an echo while simultaneously transmitting a sensing signal. That is, the time period d1 is a full duplex time period for transmission and reception. In case that the device completes transmitting the sensing signal, it can only be in the receiving state. That is, during the time period d2, a monostatic node only receives the sensing signal, which is a non-full duplex time period for transmission and reception. FIG. 6 is a schematic diagram of a requirement for a sensing time-domain structure of a monostatic partial full duplex mode according to an embodiment of the present application. As shown in FIG. 6, when adopting a monostatic partial full duplex mode, time needs to be reserved after the sensing signal. The reserved time cannot be used to transmit any information, but used to receive the reflected signal of the sensing signal by the device.

The advantage of a device having only "partial full duplex" capability is that: the complexity of co-channel interference cancellation is reduced (the sensing signal includes fewer types of information, and it is easier to cancel interference compared to communication symbols). When the sensed object and the signal transmission device are far apart, the interference may be reduced and the signal-to-noise ratio of the echo signal may be improved (the greater the reflection delay, the lower the signal-to-noise ratio of the echo signal; in case that the reflected echo signal falls in the blank symbol area, there is no self-interference caused by the device transmitting signals, thus improving the signal-to-noise ratio of the echo signal).

Therefore, the frame structure design of the above-mentioned sensing signal is more suitable for pure bistatic mode, but it is difficult to match the monostatic mode (time-division mode, or partial full duplex mode) or a hybrid mode of monostatic and bistatic, resulting in reduced sensing performance.

Embodiments of the present application provide a method and an apparatus for sensing signal transmission to improve sensing performance.

It should be noted that the method and the apparatus according to the embodiments of the present application are based on the same conception. Since the principles of the method and the apparatus to solve the problems are similar, the implementation of the apparatus and method can be similar to each other, and the same part will not be repeated.

The solutions according to the present application are clearly and completely described below in combination with the accompanying drawings in the embodiments of the present application. It should be noted that the described embodiments are some embodiments of the present application, rather than all the embodiments. Based on the embodiments of the present application, all other embodiments obtained by those of ordinary skill in the art without creative effort are within the scope of protection of the present application.

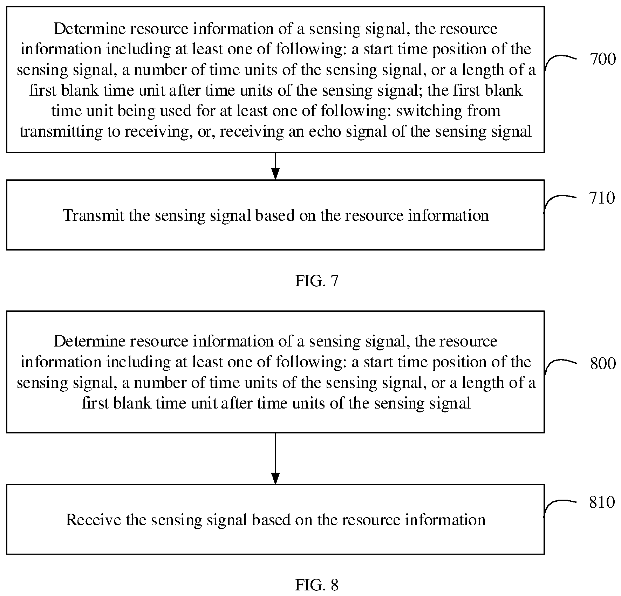

FIG. 7 is a first schematic flowchart of a method for sensing signal transmission according to an embodiment of the present application. As shown in FIG. 7, the method for sensing signal transmission is performed by a first communication device (the first communication device refers to a communication device that transmits a sensing signal and may receive an echo signal of the sensing signal). The first communication device may be a terminal or a network side device, such as a base station. The method for sensing signal transmission includes following steps.

Step 700, determining resource information of a sensing signal, where the resource information includes at least one of following: a start time of the sensing signal, a number of time units occupied by the sensing signal, or a length of a first blank time unit after the sensing signal; the first blank time unit is used for at least one of following: switching from transmitting to receiving, or, receiving an echo signal of the sensing signal.

Step 710, transmitting the sensing signal based on the resource information.

In an embodiment, the resource information of the sensing signal may include: a start time of the sensing signal (the start time domain position at which the first communication device transmits the sensing signal), a number of time units occupied by the sensing signal, or a length of a first blank time unit after the sensing signal (the time unit length after the first communication device completes transmitting the sensing signal, during which transmitting any information is stopped, and which is used for the first communication device to switch between transmitting and receiving, and to receive the echo signal).

For example, in case that the first communication device is a terminal, the network side device may configure, for the terminal, resource information of the sensing signal, such as the time domain parameters of the sensing signal: the time units occupied by the sensing signal and the subsequent first blank time unit. The subsequent first blank time unit is used for the first communication device to receive the echo signal in the hybrid mode. After determining the resource information of the sensing signal, the first communication device may transmit the sensing signal, and may also switch between transmitting and receiving and/or receive the echo signal of the sensing signal in the subsequent first blank time unit.

For example, in case that the first communication device is a network side device, the network side device may determine resource information of the sensing signal, such as the time domain parameters of the sensing signal: the time units occupied by the sensing signal and the subsequent first blank time unit. The subsequent first blank time unit is used for the first communication device to receive the echo signal in the hybrid mode. After determining the resource information of the sensing signal, the first communication device may transmit the sensing signal, and may also switch between transmitting and receiving and/or receive the echo signal of the sensing signal in the subsequent first blank time unit.

For example, the second communication device is a terminal (the second communication device merely refers to a receiver of sensing signals, which is used for receiving the sensing signal sent from the first communication device). The terminal is not expected to receive any downlink information during the first blank time unit, such as physical downlink shared channel (PDSCH), channel state information-reference signal (CSI-RS), physical downlink control channel (PDCCH), etc, considering that the first communication device may receive the echo signal of the sensing signal on the blank symbol and thus fails to perform the action of transmitting signals.

For example, the first communication device is a terminal. The terminal does not expect to transmit any uplink information during the first blank time unit, such as physical uplink control channel (PUCCH), physical uplink shared channel (PUSCH), sounding reference signal (SRS), or physical random access channel (PRACH), considering that the terminal may receive the echo signal of the sensing signal on the blank symbol and thus fails to perform the action of transmitting signals.

In embodiments of the present application, the time unit may be a symbol, a partial symbol, or any other time unit, which is not limited herein.

For example, in case that the time unit is a symbol, the network side device may configure, for the terminal, the resource information of the sensing signal. For example, the network side device may configure the time domain parameters of the sensing signal, including: the number m of symbols of the sensing signal, and the symbol number b1 of the subsequent first blank symbol.

For example, in case that the time unit is a symbol, the network side device may determine the time domain parameters of the sensing signal, including: the number m of symbols of the sensing signal, and the number b1 of symbols of the subsequent first blank symbol.

In an embodiment, the first communication device may have "partial full duplex" capability or only "time division duplex" capability.

According to a method for sensing signal transmission provided by an embodiment of the present application, a length of a first blank time unit is reserved after the time units occupied by the sensing signal, which is used for switching from transmitting to receiving, or, receiving an echo signal of the sensing signal, so that the sensing service in a monostatic mode or a hybrid monostatic-bistatic mode may be effectively carried out, thereby improving sensing performance.

In an embodiment, the method further includes:
receiving the echo signal of the sensing signal within the first blank time unit.

For example, after transmitting the sensing signal, the first communication device may also receive the echo signal of the sensing signal.

For example, in the sensing scenario, the second communication device receives the sensing signal sent from the first communication device.

For example, in scenario 1: base station 1 transmits a sensing signal. Base station 1 receives the echo signal of the sensing signal, and the terminal receives the sensing signal (the terminal does not expect to receive communication information on blank symbols). In scenario 1, the first communication device is base station 1, and the second communication device is the terminal.

In scenario 2: base station 1 transmits a sensing signal. Base station 1 receives the echo signal of the sensing signal, and base station 2 receives the sensing signal. In scenario 2, the first communication device is base station 1, and the second communication device is base station 2.

In scenario 3: terminal 1 transmits a sensing signal. Terminal 1 receives the echo signal of the sensing signal, the base station receives the sensing signal, and terminal 1 does not expect to transmit communication information on blank symbols. In scenario 3, the first communication device is terminal 1, and the second communication device is the base station.

In scenario 4: terminal 1 transmits a sensing signal. Terminal 1 receives the echo signal of the sensing signal. Terminal 2 receives the sensing signal, and terminal 1 does not expect to transmit communication information on blank symbols. In scenario 4, the first communication device is terminal 1, and the second communication device is terminal 2.

It should be noted that: receiving the echo signal of the sensing signal in the first blank time unit may be receiving a complete signal of the echo signal in the first blank time unit (e.g., the distance of the sensed object is relatively far, and the time delay of the echo signal is greater than the duration of the sensing signal). Receiving the echo signal of the sensing signal in the first blank time unit may also be receiving a portion of the echo signal in the first blank time unit (e.g., the distance of the sensed object is relatively close, the time delay of the echo signal is less than the duration of the sensing signal, a part of the echo signal overlaps with the sent sensing signal, and the other part is on the blank symbol), which is not limited here.

In an embodiment, in case that the first communication device includes a terminal, the first blank time unit is not used to transmit uplink information.

For example, in case that the sensing signal is an uplink signal, the terminal does not transmit any uplink information, such as PUSCH or SRS, in the first blank time unit.

In an embodiment, the method further includes:
obtaining a first timing advance (TA) of the sensing signal; and/or,
obtaining a length of a second blank time unit before the time units occupied by the sensing signal.

For example, for configured sensing signal for uplink transmission, the TA information of the sensing signal may be further obtained.

For example, a second blank time unit may be reserved before the time units of the signal sensing for the first communication device to adjust power or signal bandwidth or to switch between transmitting and receiving. For example, in case that the first communication device is a signal receiving node, the transmission-reception switch may be performed in the second blank time unit.

For example, in case that a second blank time unit is reserved before the time units occupied by the sensing signal, the first communication device may not transmit or receive any information during the second blank time unit, and the first communication device may adjust the power or the signal bandwidth during the second blank time unit.

For example, the first communication device is a terminal and the time unit is a symbol. The network side device (which may be the second communication device and/or the network side device to which the terminal accesses) may also configure proceeding second blank symbols for the terminal, and the number of symbols is b0. On the second blank symbols before the symbol for transmitting the sensing signal, the terminal may adjust the power or signal bandwidth or switch between transmission and reception.

For example, the first communication device is a network side device (the second communication device may be a terminal or another network side device) and the time unit is a symbol. The network side device may determine the preceding second blank symbols, and the number of symbols is b0. On the second blank symbols before the symbol for transmitting the sensing signal, the network side device may adjust the power or signal bandwidth or switch between transmission and reception.

In an embodiment, in case that the first communication device includes a terminal, obtaining the first TA of the sensing signal includes:
receiving TA information sent from a network side device, and determining the first TA of the sensing signal based on the TA information;
where the TA information includes one or more of following:
   the first TA;
   a second TA used to transmit a message or data; or
   a timing advance offset, where the timing advance offset is an offset of the first TA relative to the second TA.

For example, the timing advance (TA_s) for the terminal transmitting the sensing and communication signal (sensing signal), i.e., the first TA, may be indicated to the terminal by the network side device in the following way.
(1) The base station (which may be a second communication device and/or a network side device to which the terminal accesses) separately indicates (via higher-layer signaling, MAC-CE, or physical-layer signaling).
(2) The indication of "timing advance TA for transmitting communication information" applies to TA_s.
(3) Based on "timing advance TA for transmitting communication information", the base station indicates an offset.

For example, the timing advance (TA_s) for the terminal transmitting the sensing and communication signal (sensing signal), i.e., the first TA, may be timing advance relative to a time point T0 as follows:
(1) an absolute time indicated by the base station (which may be the second communication device and/or the network side device to which the terminal accesses), where the terminal may determine the time point T0_TX for transmitting the corresponding sensing symbol using the absolute time.
(2) downlink subframe timing time or symbol timing time T0_RX for terminal reception, determined by the terminal based on the downlink synchronization signal.

For example, in case that the first communication device is a terminal, for the sensing signal configured for uplink transmission, the network side device may further indicate the terminal the first timing advance TA for transmitting the sensing signal.

For example, for the sensing mode of base station (first communication device) and terminal (second communication device), or the sensing mode of base station 1 (first communication device) and base station 2 (second communication device), in case that the first communication device transmits a sensing signal on the uplink symbol, the base station may also indicate the TA_s used for transmitting the sensing signal, that is, indicate the first TA used for transmitting the sensing signal through the TA information.

For example, TA information may indicate the relative position and/or absolute time of TA_s.

The timing advance of TA_s relative to the following two time-reference points may be:
(1) the time point T0_Tx indicated by the network side device (i.e., the timing information in case that the base station transmits downlink information);
(2) the downlink timing information T0_Rx detected by the first communication device based on the synchronization channel.

In an embodiment, in case that the first communication device includes a terminal, determining the resource information of the sensing signal includes:
receiving resource configuration information of the sensing signal sent from a network side device; and
determining the resource information of the sensing signal based on the resource configuration information.

For example, in case that the first communication device is a terminal, the network side device (which may be the second communication device and/or the network side device to which the terminal accesses) may configure, for the terminal, the resource information of the sensing signal through resource configuration information.

In an embodiment, determining the resource information of the sensing signal includes:
in case of determining the number of time units occupied by the sensing signal to be greater than 1 based on the resource configuration information, determining the length of the first blank time unit to be 0.

For example, in case that the first communication device is a terminal, the network side device (which may be the second communication device and/or the network side device to which the terminal accesses) may configure, for the terminal, the resource information of the sensing signal through resource configuration information. For example, the network side device may configure the number of time units occupied by the sensing signal and the length of the first blank time unit, or configure only one of them, and the terminal may obtain the other based on the default or by deduction.

For example, in case that the resource configuration information indicates that the number of time units occupied by the sensing signal is greater than 1, the length of the first blank time unit does not need to be configured, and the terminal may determine the length of the first blank time unit to be 0 based on default or deduction.

For example, the resource configuration information indicates the number m of symbols of the sensing signal with m>1. The length b1 of the first blank symbol does not need to be configured, that is, b1=0 by default.

In an embodiment, determining the resource information of the sensing signal includes:
in case of determining the length of the first blank time unit to be greater than 0 based on the resource configuration information, determining the number of time units occupied by the sensing signal to be 1.

For example, in case that the resource configuration information indicates that the length of the first blank time unit is greater than 1, the number of time units occupied by the sensing signal does not need to be configured, and the terminal may determine the number of time units occupied by the sensing signal to be 1 based on the default or deduction.

For example, the resource configuration information indicates the length b1 of the first blank symbol with b1>0, and the number of symbols m of the sensing signal does not need to be configured, that is, m=1 by default.

In an embodiment, in case that the first communication device includes a terminal, the method further includes:
determining whether to transmit a message or data within the time units occupied by the sensing signal.

For example, in case that the first communication device is a terminal, for the sensing signal configured for uplink transmission, the network side device may further indicate the timing advance TA information of the sensing signal to the base station. The terminal may also determine whether to transmit communication information, such as messages or data, in the time units occupied by the sensing signal.

In an embodiment, determining whether to transmit the message or data within the time units occupied by the sensing signal includes:
determining whether to transmit the message or data within the time units occupied by the sensing signal based on the first TA and a second TA.

For example, in case of determining whether to transmit the communication information within the time units occupied by the sensing signal, the terminal may determine, based on the first TA and the second TA (TA of the communication signal, i.e., TA for transmitting the message or data) used for the sensing signal, whether the communication information may be transmitted simultaneously with the sensing signal; that is, whether the message or data can be transmitted within the time units occupied by the sensing signal.

In an embodiment, determining whether to transmit the message or data within the time units occupied by the sensing signal based on the first TA and a second TA includes one or more of following:
in case that an absolute value of a difference between the first TA and the second TA is less than or equal to a predetermined threshold, determining to transmit the message or data within the time units occupied by the sensing signal; or
in case that an absolute value of a difference between the first TA and a first value is less than or equal to a predetermined threshold, determining to transmit the message or data within the time units occupied by the sensing signal, where the first value is calculated based on the second TA.

For example, the terminal determines whether to transmit the communication information simultaneously in case of transmitting the sensing signal based on the first TA and the second TA used for the sensing signal. The determination may be performed by the difference between the first TA and the second TA, or by the difference between the first TA and a first value. The first value may be obtained by performing mathematical operations on the second TA, such as dividing the second TA by 2 or dividing the second TA by 1.5, which is not limited here.

In an embodiment, in case that an absolute value of a difference between the first TA and the second TA is less than or equal to a predetermined threshold, the sensing signal and the communication signal need to be multiplexed. Therefore, the communication message or data is sent within the time units occupied by the sensing signal.

In an embodiment, in case that an absolute value of a difference between the first TA and the second TA is greater than a predetermined threshold, it can be determined that a difference between the start time of the sensing signal and the start time of the communication signal exceeds the duration corresponding to the preset threshold, and the sensing signal and the communication signal may not be multiplexed.

In an embodiment, in case that an absolute value of a difference between the first TA and the second TA is greater than a predetermined threshold, it can be determined that the sensing signal requires multiple base stations to receive, that is, the TA of the sensing signal is not aligned with the TA of the normal communication signal.

In an embodiment, the terminal may use at least one of the following methods to determine whether to transmit the communication information simultaneously while transmitting the sensing signal.
(1) In case that the absolute value of the difference between TA_s (first TA) and TA_c/2 (first value) is less than (or equal to) a predetermined threshold, the sensing signal and the communication information may be transmitted simultaneously. (Note: in this case, the relative positions of the timing advance for the sensing signal and the communication information are different <the sensing signal is relative to T0_Tx, and the communication information is relative to T0_Rx).
(2) In case that the absolute value of the difference between TA_s (first TA) and TA_c (second TA) is less than (or equal to) a certain threshold, the sensing signal and the communication information may be transmitted simultaneously. (Note: in this case, the relative positions of the timing advance for the sensing signal and the communication information are the same (both are T0_Tx or T0_Rx)).

It should be noted that: in case that the difference between TA_s and TA_c (or the difference between TA_s and TA_c/2) is less than a certain threshold, it means that the base stations receiving the sensing signal and the communication information are both serving base stations. In case that the difference is greater than a certain threshold, it means that the base stations receiving the sensing signal also include non-serving base stations, and therefore the sensing signal may not be sent together with the communication information.

In an embodiment, in case that the first communication device includes a first network side device and a receiving node of the sensing signal includes the first network side device or a second network side device, the method further includes:
before transmitting the sensing signal, determining whether the time units occupied by the sensing signal belong to uplink time units or downlink time units.

For example, in the sensing mode of base station 1 (first communication device) and base station 2 (second communication device), it may be further determined whether the time units for base station 1 to transmit the sensing signals belongs to the uplink time units or the downlink time units. Therefore, the basis for determining the TDD ratio may be determined.

In an embodiment, determining whether the time units occupied by the sensing signal belong to the uplink time units or the downlink time units includes:
based on a predefined protocol, determining that the time units occupied by the sensing signal belong to the downlink time units; or
based on attribute indication information, determining that the time units occupied by the sensing signal belong to the uplink time units and/or the downlink time units.

For example, the protocol may specify that the time units occupied by the sensing signal belong to the downlink time units. In the sensing mode of base station 1 (first communication device) and base station 2 (second communication device), it may be further determined that the time units for base station 1 to transmit the sensing signal belong to the downlink time units.

For example, the attributes of the time units occupied by the sensing signal may be indicated by attribute indication information. For example, the uplink attributes (sent only on uplink symbols), or the downlink attributes (sent only on downlink symbols), or the uplink and downlink attributes (according to uplink and downlink ratio information, symbols in the downlink range are downlink, and symbols in the uplink range are uplink) may be indicated. In the sensing mode of base station 1 (first communication device) and base station 2 (second communication device), it is possible to further determine, based on attribute indication information, that the time units for base station 1 to transmit the sensing signal belong to the uplink time units, or based on attribute indication information, that the time units for base station 1 to transmit the sensing signals belong to the downlink time units, or based on attribute indication information, that the time units for base station 1 to transmit sensing signals belongs to both uplink and downlink time units (according to the uplink/downlink ratio information, the symbols in the downlink range are downlink, and the symbols in the uplink range are uplink).

In an embodiment, the length of the second blank time unit is an integer multiple of a length of a time unit;
and/or,
a sum of the length of the second blank time unit and the length of the first blank time unit is an integer multiple of a length of a time unit.

For example, the time unit is a symbol, while configuring the second blank symbol b0, the duration of b0 may be an integer multiple of the duration of the OFDM symbol (e.g., b0 = 1 symbol duration) or not an integer multiple (e.g., b0 = 0.5 symbol duration). Similarly, the first blank symbol b1 may also not be an integer multiple of the symbol duration (e.g., b1 = 1.5 symbol duration). However, it is recommended that b0+b1 may be an integer multiple of the symbol duration.

In an embodiment, in case that the length of the second blank time unit is not an integer multiple of a length of a time unit, the time units occupied by the sensing signal are not used for transmitting or receiving a message or data.

For example, while the time units of the communication signal and the sensing signal use the same SCS and CP type, in case that the length of the second blank time unit is b0 and b0 is not an integer multiple of the time unit, then the first communication device may not receive or transmit communication information within the time units occupied by the sensing signal.

For example, the first communication device is a terminal and the time unit is a symbol, in case that the communication symbols and the sensing symbols use the same SCS and CP type, if the base station configures a proceeding blank symbol b0, and b0 is not an integer multiple of the OFDM symbol, then the terminal may not receive or transmit communication information on m symbols (sensing symbols).

In an embodiment, in case that the time units occupied by the sensing signal and the communication signal use different SCS or CP types, the time units occupied by the sensing signal are not used for transmitting or receiving communication information.

For example, while the time units of the communication signal and the sensing signal use different SCS and CP types, the first communication device may not receive or transmit communication information within the time units occupied by the sensing signal.

For example, the first communication device is a terminal and the time unit is a symbol. While the communication symbols and the sensing symbols use different SCS and CP types, the terminal does not receive or transmit communication information on m symbols (sensing symbols).

In an embodiment, in case that the first communication device includes a terminal, the method further includes:
transmitting a message or data within the time units occupied by the sensing signal.

For example, in case that the first communication device is a terminal, the terminal may transmit the communication signal, i.e., transmit the message or data, within the time units occupied by the sensing signal.

In an embodiment, the method further includes:
obtaining a feature parameter or model parameter of a sensed object; and
in case that a measurement quantity contained in a received sensing signal matches the feature parameter or model parameter of the sensed object, transmitting the measurement quantity.

For example, after transmitting the sensing signal, the first communication device may also act as a receiving node for the echo signal of the sensing signal to receive the sensing signal. The first communication device may also configure a feature parameter or model parameter of a sensed object, such as the shape, size, material composition, and movement state of the sensed object.

For example, the first communication device may first determine whether there is a measurement quantity in the echo signal of the received sensing signal that matches the feature/model. In a case that a measurement quantity that matches the feature/model is detected, the relevant measurement quantity is reported. Otherwise, the measurement result is not reported this time, or it indicates that no measurement quantity that matches the feature/model was detected.

FIG. 8 is a second schematic flowchart of a method for sensing signal transmission according to an embodiment of the present application. As shown in FIG. 8, the method for sensing signal transmission is performed by a second communication device, which may be a terminal or a network side device, such as a base station. The method includes following steps.

Step 800, determine resource information of a sensing signal, where the resource information includes at least one of following: a start time of the sensing signal, a number of time units occupied by the sensing signal, or a length of a first blank time unit after the sensing signal.

Step 810, transmit the sensing signal based on the resource information.

For example, in the sensing scenario, after transmitting a sensing signal, the first communication device may also receive the echo signal of the sensing signal. The second communication device receives the sensing signal sent from the first communication device.

For example, in scenario 1: base station 1 transmits a sensing signal. Base station 1 receives the echo signal of the sensing signal, and the terminal receives the sensing signal (the terminal does not expect to receive communication information on blank symbols). In scenario 1, the first communication device is base station 1, and the second communication device is the terminal.

In scenario 2: base station 1 transmits a sensing signal. Base station 1 receives the echo signal of the sensing signal, and base station 2 receives the sensing signal. In scenario 2, the first communication device is base station 1, and the second communication device is base station 2.

In scenario 3: terminal 1 transmits a sensing signal. Terminal 1 receives the echo signal of the sensing signal, the base station receives the sensing signal, and terminal 1 does not expect to transmit communication information on blank symbols. In scenario 3, the first communication device is terminal 1, and the second communication device is the base station.

In scenario 4: terminal 1 transmits a sensing signal. Terminal 1 receives the echo signal of the sensing signal. Terminal 2 receives the sensing signal, and terminal 1 does not expect to transmit communication information on blank symbols. In scenario 4, the first communication device is terminal 1, and the second communication device is terminal 2.

It should be noted that: receiving the echo signal of the sensing signal in the first blank time unit may be receiving a complete signal of the echo signal in the first blank time unit (e.g., the distance of the sensed object is relatively far, and the time delay of the echo signal is greater than the duration of the sensing signal). Receiving the echo signal of the sensing signal in the first blank time unit may also be receiving a portion of the echo signal in the first blank time unit (e.g., the distance of the sensed object is relatively close, the time delay of the echo signal is less than the duration of the sensing signal, a part of the echo signal overlaps with the sent sensing signal, and the other part is on the blank symbol), which is not limited here.

In an embodiment, the resource information of the sensing signal may include: a start time of the sensing signal (the start time domain position at which the first communication device transmits the sensing signal), a number of time units occupied by the sensing signal, or a length of a first blank time unit after the sensing signal (the time unit length after the first communication device completes transmitting the sensing signal, during which transmitting any information is stopped, and which is used for the first communication device to switch between transmitting and receiving, and to receive the echo signal).

For example, in case that the second communication device is a terminal, the network side device may configure, for the terminal, resource information of the sensing signal, such as the time domain parameters of the sensing signal: the time units occupied by the sensing signal and the subsequent first blank time unit. The subsequent first blank time unit is used for the first communication device to receive the echo signal in the hybrid mode. After determining the resource information of the sensing signal, the first communication device may transmit the sensing signal, and may also switch between transmitting and receiving and/or receive the echo signal of the sensing signal in the subsequent first blank time unit.

For example, in case that the second communication device is a network side device, the network side device may determine resource information of the sensing signal, such as the time domain parameters of the sensing signal: the time units occupied by the sensing signal and the subsequent first blank time unit. The subsequent first blank time unit is used for the first communication device to receive the echo signal in the hybrid mode. After determining the resource information of the sensing signal, the first communication device may transmit the sensing signal, and may also switch between transmitting and receiving and/or receive the echo signal of the sensing signal in the subsequent first blank time unit.

For example, the second communication device is a terminal. The terminal assumes that the base station may not transmit communication information during the first blank time unit, meaning the terminal may not receive downlink communication information during the first blank time unit, such as physical downlink control channel (PDCCH), physical downlink shared channel (PDSCH), CSI-RS, etc.

For example, the second communication device is a terminal (the second communication device merely refers to a receiver of sensing signals, which is used for receiving the sensing signal sent from the first communication device). The terminal does not expect to receive any downlink information during the first blank time unit, such as PDSCH, CSI-RS, PDCCH, etc, considering that the first communication device may receive the echo signal of the sensing signal on the blank symbol and thus fails to perform the action of transmitting signals.

For example, the first communication device is a terminal. The terminal does not expect to transmit any uplink information during the first blank time unit, such as PUCCH, PUSCH, SRS or PRACH, considering that the terminal may receive the echo signal of the sensing signal on the blank symbol and thus fails to perform the action of transmitting signals.

In embodiments of the present application, the time unit may be a symbol, a partial symbol, or any other time unit, which is not limited herein.

For example, in case that the time unit is a symbol, the network side device may configure, for the terminal, the resource information of the sensing signal. For example, the network side device may configure the time domain parameters of the sensing signal, including: the number m of symbols of the sensing signal, and the number b1 of symbols of the subsequent first blank symbol.

For example, in case that the time unit is a symbol, the network side device may determine the time domain parameters of the sensing signal, including: the number m of symbols of the sensing signal, and the number b1 of symbols of the subsequent first blank symbol.

According to a method for sensing signal transmission provided by an embodiment of the present application, a length of a first blank time unit is reserved after the time units occupied by the sensing signal, which is used for switching from transmitting to receiving, or, receiving an echo signal of the sensing signal, so that the sensing service in a monostatic mode or a hybrid mode of monostatic and bistatic may be effectively carried out, thereby improving sensing performance.

In an embodiment, the method further includes:
obtaining a length of a second blank time unit before the time units occupied by the sensing signal.

For example, a second blank time unit may be reserved before the time units of the signal sensing for the first communication device to adjust power or signal bandwidth or to switch between transmitting and receiving. For example, in case that the first communication device is a signal receiving node, the transmission-reception switch may be performed in the second blank time unit.

For example, in case that a second blank time unit is reserved before the time units occupied by the sensing signal, the first communication device may not transmit or receive any information during the second blank time unit, and the first communication device may adjust the power or the signal bandwidth during the second blank time unit.

For example, the first communication device is a terminal and the time unit is a symbol. The network side device may also configure proceeding second blank symbols for the terminal, and the number of symbols is b0. On the second blank symbols before the symbol for transmitting the sensing signal, the terminal may adjust the power or signal bandwidth or switch between transmission and reception.

For example, the first communication device is a network side device and the time unit is a symbol. The network side device may determine the preceding second blank symbols, and the number of symbols is b0. On the second blank symbols before the symbol for transmitting the sensing signal, the network side device may adjust the power or signal bandwidth or switch between transmission and reception.

In an embodiment, the method further includes:
not receiving a message or data within the first blank time unit or a second blank time unit.

In an embodiment, the second communication device may not receive any information during the first blank time unit.

In an embodiment, the second communication device may not receive any information during the second blank time unit.

In an embodiment, in case that the second communication device includes a terminal, the method further includes:
receiving a message or data within the time units occupied by the sensing signal.

For example, in case that the second communication device includes a terminal, in the time units occupied by the sensing signal, in addition to receiving the sensing signal, the terminal may also receive communication information, i.e., receive a message or data, such as PDCCH, PDSCH or CSI-RS, according to the scheduling signaling of the network side device (which may be the first communication device) or the higher-layer configuration signaling.

In an embodiment, determining the resource information of the sensing signal includes:
receiving resource configuration information of the sensing signal sent from a network side device; and
determining the resource information of the sensing signal based on the resource configuration information.

For example, the network side device may configure, for the terminal, the resource information of the sensing signal through resource configuration information.

For example, in case that the first communication device is a base station and the second communication device is a terminal, the base station may configure, for the terminal, resource information of sensing signals.

For example, in case that the first communication device is base station 1 and the second communication device is base station 2, base station 1 may configure, for base station 2, the resource information of sensing signals.

In an embodiment, determining the resource information of the sensing signal includes:
in case of determining the number of time units occupied by the sensing signal to be greater than 1 based on the resource configuration information, determining the length of the first blank time unit to be 0.

For example, in case that the second communication device is a terminal, the network side device (which may be the first communication device and/or the network side device to which the terminal accesses) may configure, for the terminal, the resource information of the sensing signal through resource configuration information. For example, the network side device may configure the number of time units occupied by the sensing signal and the length of the first blank time unit, or configure only one of them, and the terminal may obtain the other based on the default or by deduction.

For example, in case that the resource configuration information indicates that the number of time units occupied by the sensing signal is greater than 1, the length of the first blank time unit does not need to be configured, and the terminal may determine the length of the first blank time unit to be 0 based on default or deduction.

For example, the resource configuration information indicates the number m of symbols of the sensing signal with m>1. The length b1 of the first blank symbol does not need to be configured, that is, b1=0 by default.

In an embodiment, determining the resource information of the sensing signal includes:
in case of determining the length of the first blank time unit to be greater than 0 based on the resource configuration information, determining the number of time units occupied by the sensing signal to be 1.

For example, in case that the resource configuration information indicates that the length of the first blank time unit is greater than 1, the number of time units occupied by the sensing signal does not need to be configured, and the terminal may determine the number of time units occupied by the sensing signal to be 1 based on the default or deduction.

For example, the resource configuration information indicates the length b1 of the first blank symbol with b1>0, and the number of symbols m of the sensing signal does not need to be configured, that is, m=1 by default.

In an embodiment, the length of the second blank time unit is an integer multiple of a length of a time unit;
and/or,
a sum of the length of the second blank time unit and the length of the first blank time unit is an integer multiple of a length of a time unit.

For example, the time unit is a symbol, while configuring the second blank symbol b0, the duration of b0 may be an integer multiple of the duration of the OFDM symbol (e.g., b0 = 1 symbol duration) or not an integer multiple (e.g., b0 = 0.5 symbol duration). Similarly, the first blank symbol b1 may also not be an integer multiple of the symbol duration (e.g., b1 = 1.5 symbol duration). However, it is recommended that b0+b1 may be an integer multiple of the symbol duration.

In an embodiment, in case that the length of the second blank time unit is not an integer multiple of a length of a time unit, the time units occupied by the sensing signal are not used for transmitting or receiving a message or data.

For example, while the time units of the communication signal and the sensing signal use the same SCS and CP type, in case that the length of the second blank time unit is b0 and b0 is not an integer multiple of the time unit, then the first communication device and/or the second communication device may not receive or transmit communication information within the time units occupied by the sensing signal.

For example, the second communication device is a terminal and the time unit is a symbol, in case that the communication symbols and the sensing symbols use the same SCS and CP type, if the base station (the base station may be the first communication device and/or the network side device to which the terminal accesses) configures a proceeding blank symbol b0, and b0 is not an integer multiple of the OFDM symbol, then the terminal may not receive or transmit communication information on m symbols (sensing symbols).

In an embodiment, in case that the time units occupied by the sensing signal and the communication signal use different SCS or CP types, the time units occupied by the sensing signal are not used for transmitting or receiving communication information.

For example, while the time units of the communication signal and the sensing signal use different SCS and CP types, the first communication device and/or the second communication device may not receive or transmit communication information within the time units occupied by the sensing signal.

For example, the second communication device is a terminal (at this time, the first communication device may be a base station), and the time unit is a symbol. While the communication symbols and the sensing symbols use different SCS and CP types, the terminal does not receive or transmit communication information on m symbols (sensing symbols).

In an embodiment, the method further includes:
obtaining a feature parameter or model parameter of a sensed object; and
in case that a measurement quantity contained in a received sensing signal matches the feature parameter or model parameter of the sensed object, transmitting the measurement quantity.

For example, after the first communication device transmits the sensing signal, the second communication device may act as a receiving node for the echo signal of the sensing signal to receive the sensing signal. The first communication device may also configure a feature parameter or model parameter of a sensed object, such as the shape, size, material composition, and movement state of the sensed object.

For example, the second communication device may first determine whether there is a measurement quantity in the echo signal of the received sensing signal that matches the feature/model. In a case that a measurement quantity that matches the feature/model is detected, the relevant measurement quantity is reported. Otherwise, the measurement result is not reported this time, or it indicates that no measurement quantity that matches the feature/model was detected.

In an embodiment, for a base station, the base station may configure resource information of the sensing signal. The configuration parameters may include: the start time s of the sensing signal, the number m of time units occupied by the sensing signal, and the length b1 of the first blank time unit after the time units occupied by the sensing signal.

For example, the time unit is a symbol.

The start time s of the sensing signal: the start symbol position at which the first communication device transmits the sensing signal.

The number m of time units occupied by the sensing signal: the number of symbols of the sensing signal transmitted by the first communication device.

The length b1 of the first blank time unit after the time units occupied by the sensing signal: the number of symbols during which the first communication device stops transmitting any information after transmitting the sensing signal. The blank symbol period is used for the transmission/reception switch at the transmitter, and the reception of the echo signal.

Furthermore, the base station may also configure a proceeding second blank symbol b0 (i.e., a second blank time unit). The blank symbol before transmitting the sensing symbol may be used by the first communication device to adjust the power or signal bandwidth, or by the measurement signal receiving node to perform transmission/reception switch.

For example, while configuring b0, the duration of b0 may be an integer multiple of the duration of the OFDM symbol (e.g., b0 = 1 symbol duration) or not an integer multiple (e.g., b0 = 0.5 symbol duration). Similarly, b1 may also not be an integer multiple of the symbol duration (e.g., b1 = 1.5 symbol duration). However, it is recommended that b0+b1 may be an integer multiple of the symbol duration.

In an embodiment, the terminal may receive or transmit the sensing signal based on the resource information of the sensing signal.

For example, the terminal determines the start time s for receiving the sensing signal, the number m of time units occupied by the sensing signal, and the length b1 of the first blank time unit after the time units occupied by the sensing signal.

Case 1 (terminal receives the sensing signal): the time unit is a symbol, and the terminal determines the following resource information of the sensing signal.

The start time s of the sensing signal: the starting symbol position at which the terminal receives the sensing signal.

The number m of time units occupied by the sensing signal: on m symbols, in addition to receiving the sensing signal, the terminal may also receive communication information (such as PDCCH, PDSCH or CSI-RS) according to the scheduling signaling (or the higher-layer configuration signaling) of the base station.

The length b1 of the first blank time unit after the time units occupied by the sensing signal: on the first blank symbol b1, the terminal considers that the base station may not transmit communication information, that is, the terminal may not receive downlink communication information (such as PDCCH, PDSCH or CSI-RS) on the symbol.

Case 2 (terminal transmits the sensing signal): the time unit is a symbol, and the terminal determines the following resource information of the sensing signal.

The start time s of the sensing signal: the starting symbol position at which the terminal transmits the sensing signal.

The number m of time units occupied by the sensing signal: on m symbols, in addition to transmitting the sensing signal, the terminal may also determine whether to transmit uplink communication information (such as PUCCH, PUSCH, SRS or PRACH) based on the difference (the absolute value of the difference is less than a predetermined threshold) between TA_s (first TA) and TA_c (second TA).

The length b1 of the first blank time unit following the time units occupied by the sensing signal: on the first blank symbol b1, the terminal does not transmit any information (such as PUCCH, PUSCH, SRS or PRACH) on the symbol.

In an embodiment, to save on the overhead of configuring resource information, only one of m and b1 may be configured, and the other may be calculated based on the configuration items.
(1) In case that m is configured and m>1, the terminal considers b1=0. That is, b1 does not need to be configured, and it is calculated based on m.
(2) In case that b1 is configured and b1>0, then m=1. That is, m does not need to be configured, and may be calculated based on b1.

In an embodiment, in case that the base station configures a proceeding second blank symbol b0 (i.e., the second blank time unit), the terminal may not transmit any information on the b0 symbol according to the indication b0, and the transmitting node of the sensing signal may adjust the power or the signal bandwidth.

In an embodiment, in case that the communication symbols and the sensing symbols use the same SCS and CP type, if the base station configures a proceeding second blank symbol b0, and b0 is not an integer multiple of the OFDM symbol, then the terminal may not receive or transmit communication information on m symbols.

In an embodiment, in case that communication symbols and the sensing symbols use different SCS or CP types, the terminal does not receive or transmit communication information on m symbols.

In an embodiment, the sensing node that receives the sensing signal may also be configured with the feature parameters or model parameters of the sensed object (for example, representing the shape, size, material composition, and movement state of the sensed object). The sensing node may first determine whether there is a measurement quantity in the received sensing signal that matches the feature/model. In a case that a measurement quantity that matches the feature/model is detected, the relevant measurement quantity is reported. Otherwise, the measurement result is not reported this time, or it indicates that no measurement quantity that matches the feature/model was detected.

In embodiments of the present application, for the bistatic mode of base station and terminal or the hybrid mode, the downlink symbol refers to the symbol of the sensing signal sent from the base station (received by the terminal). The uplink symbol refers to the symbol of the sensing signal sent from the terminal (received by the base station). Correspondingly, the positions of the downlink and uplink symbols follow the uplink/downlink slot information indicated by the base station.

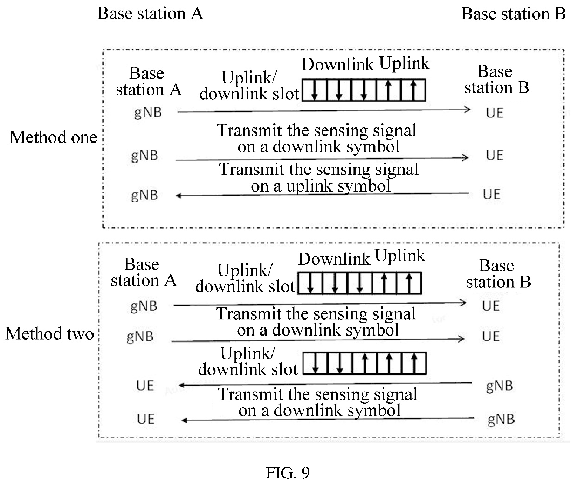

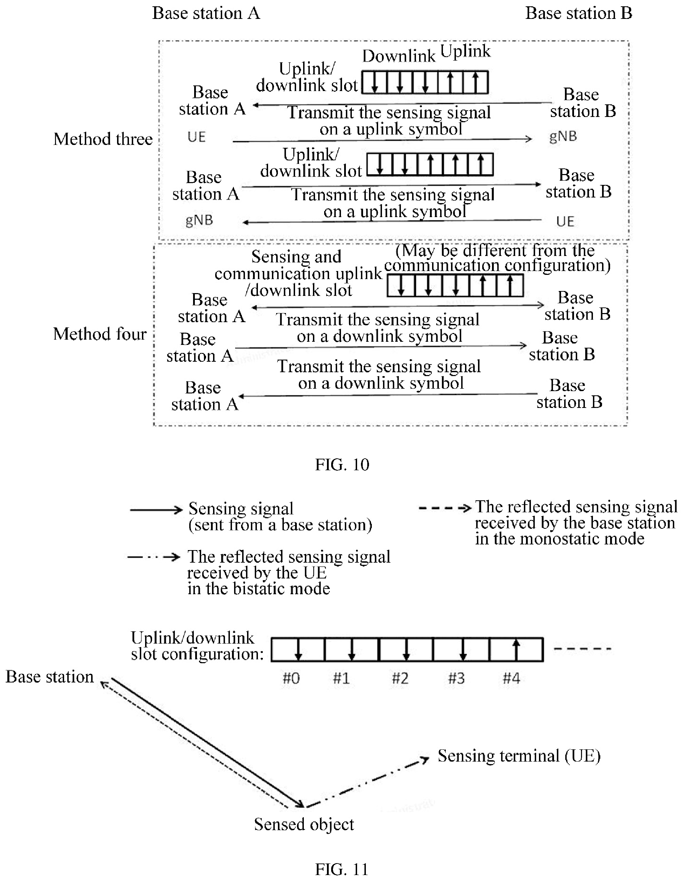

In embodiments of the present application, FIG. 9 is a first schematic diagram of a bistatic mode of base station A and base station B according to an embodiment of the present application, and FIG. 10 is a second schematic diagram of a bistatic mode of base station A and base station B according to an embodiment of the present application. As shown in FIGS. 9 and 10, the bistatic mode of base station A and base station B, or the hybrid mode, includes the following methods.

Method 1: indicate one base station as a base station and the other base station as a terminal.

For example, method 1 may be indicated by the sensing server or through negotiation between the two base stations.

For the allocation of sensing resources of a certain sensing service, one base station is indicated as the first base station (e.g., the main base station), and the other base station is indicated as the second base station (e.g., the secondary base station). The first base station acts as a base station, and the second base station acts as a terminal.

Downlink symbol refer to the symbol used by the base station (first base station) to transmit (the second base station to receive) the sensing signals.

Uplink symbol refers to the symbol used by the second base station to transmit (the first base station to receive) the sensing signal.

Accordingly, the positions of the downlink/uplink symbols follow the uplink/downlink slot information indicated by the first base station.

Method 2: The transmitter is a base station, and the receiver is a terminal.

Downlink symbol refer to the symbol used by base station A or base station B to transmit (base station B or base station A to receive) sensing signals.

Accordingly, in case that base station A acts as the transmitter, the position of the downlink/uplink symbol follows the uplink/downlink slot information indicated by base station A.

Accordingly, in case that base station B acts as the transmitter, the position of the downlink/uplink symbol follows the uplink/downlink slot information indicated by base station B.

Method 3: The base station that transmits the sensing signal is the terminal, and the receiver is the base station.

Uplink symbol refers to the symbol used by base station A or base station B to transmit (base station B or base station A to receive ) sensing signals.

Accordingly, in case that base station A acts as the transmitter, the position of the downlink/uplink symbol follows the uplink/downlink slot information indicated by base station B.

Accordingly, in case that base station B acts as the transmitter, the position of the downlink/uplink symbol follows the uplink/downlink slot information indicated by base station A.

Method 4: Separately indicate the uplink/downlink slots of the sensing and communication signal and transmit the sensing signal in the downlink.

Uplink/downlink slot information (negotiated between base stations, or indicated by the sensing server) is separately indicated for the configure information for the sensing signal.

In case that base station A acts as the transmitter, base station A transmits the sensing signal in the downlink symbols, and the positions of the downlink/uplink symbols follow the uplink/downlink slot information for sensing and communication.

In case that base station B acts as the transmitter, base station B transmits sensing signals in the downlink symbols, and the positions of the downlink/uplink symbols follow the uplink/downlink slot information for sensing and communication.

It should be noted that for method 4, the sensing signal may also be restricted to be sent only on the uplink symbol.

In an embodiment, the sensing scenario is in a hybrid mode of monostatic sensing and bistatic sensing, the sensing signal is transmitted on downlink symbol (the base station is the first communication device, and the terminal is the second communication device). FIG. 11 is a first schematic structural diagram of a hybrid mode of bistatic sensing and monostatic sensing according to an embodiment of the present application. As shown in FIG. 11, the base station transmits sensing signals on downlink symbol #1 and receives echo signals (after reflection from the sensed object) on symbols #2/#3. The sensing terminal receives the sensing signal on symbol #1. No downlink symbols are received on symbols #2 and #3.

For a base station, the base station may configure resource information of the sensing signal. The configuration parameters may include: the start time s of the sensing signal, the number m of time units occupied by the sensing signal, and the length b1 of the first blank time unit after the time units occupied by the sensing signal.

For example, the time unit is a symbol.

The start time s of the sensing signal: the start symbol position at which the first communication device transmits the sensing signal. Here, s=1 indicates the second symbol starting from a slot. It should be noted that the first symbol was s=0.

The number m of time units occupied by the sensing signal: the number of symbols of the sensing signal transmitted by the first communication device, where m=1. Typically, for monostatic sensing mode, the value of m is 1. For bistatic sensing mode, m may be 1, 2, or 4.

The length b1 of the first blank time unit after the time units occupied by the sensing signal: the number of symbols during which the first communication device stops transmitting any information after transmitting the sensing signal. The blank symbol period is used for the transmission/reception switch at the transmitter, and the reception of the echo signal. Here, b1=2.

In an embodiment, the value of b1 is related to the farthest sensing distance L and the subcarrier spacing width.

In an embodiment, resource information of sensing signals may be configured to the base station by the sensing service.

In an embodiment, resource information of sensing signals may be determined based on the furthest sensing distance of the service.

For example, b1=duration(2*L)/duration(1 symbol), or b1=duration(2*L)/duration(1 symbol)-m.

Duration () is used to calculate the time length. To ensure that the length of the blank symbol is greater than or equal to twice the echo delay, the calculated b can be rounded up.

For the terminal, the terminal may receive or transmit sensing signals based on the resource information of the sensing signals.

For example, the terminal determines the position of the sensing resources transmitted by the base station based on the configuration information of the sensing resources, and performs signal reception and measurement.

For example, the terminal determines the start time s for receiving the sensing signal, the number m of time units occupied by the sensing signal, and the length b1 of the first blank time unit after the time units occupied by the sensing signal.

For example, the time unit is a symbol.

The start time s of the sensing signal: the starting symbol position at which the terminal receives the sensing signal.

The number m of time units occupied by the sensing signal: on m symbols, in addition to receiving the sensing signal, the terminal may also receive communication symbol information (such as PDCCH, PDSCH or CSI-RS) according to the scheduling signaling (or the higher-layer configuration signaling) of the base station.

The length b1 of the first blank time unit after the time units occupied by the sensing signal: on the first blank symbol b1, the terminal considers that the base station may not transmit communication symbols, that is, the terminal may not receive downlink communication information (such as PDCCH, PDSCH or CSI-RS) on the symbol.

In an embodiment, for m symbols, the base station may also indicate the terminal not to receive downlink communication symbol information. In the case, the terminal may not receive downlink communication information on the symbol (e.g., PDCCH, PDSCH, CSI-RS).

In an embodiment, for periodic sensing resource configuration (or repeated transmission configuration), in case that any one of the above m symbols does not correspond to a downlink symbol, but corresponds to such as an uplink symbol, the terminal considers that the base station may not transmit sensing signals on the m symbols, that is, the terminal considers that the corresponding sensing resource configuration is invalid (including: m symbols and b1 symbols).

In an embodiment, for periodic sensing resource configuration (or repeated transmission configuration), in case that all m symbols are downlink symbols, but at least one of the b1 symbols is not a downlink symbol, then the protocol indicates that the corresponding sensing resource configuration of the terminal is valid (including m symbols and b1 symbols) or invalid; or the base station indicates that it is valid or invalid.

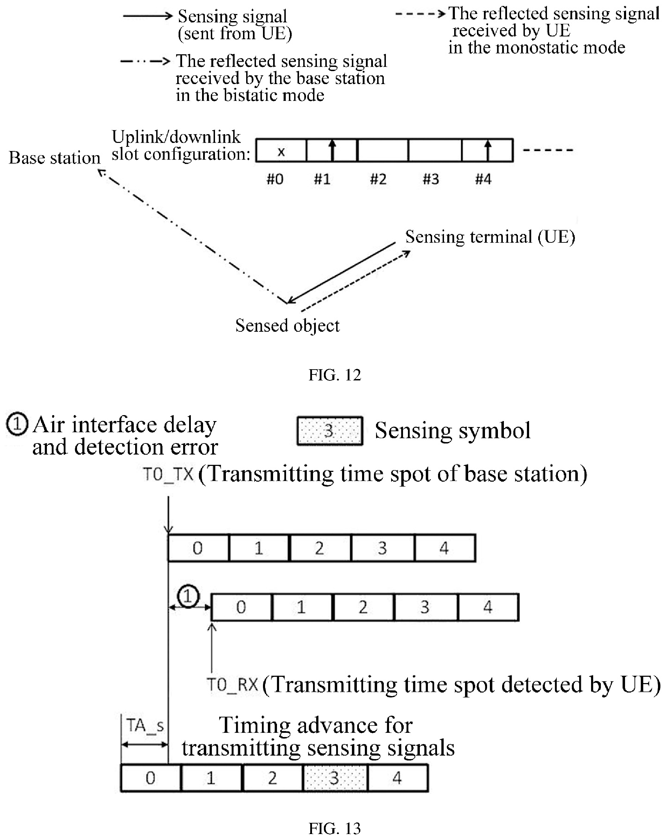

In an embodiment, the sensing scenario is in a hybrid mode of monostatic sensing and bistatic sensing, the sensing signal is transmitted on uplink symbol (the terminal is the first communication device, and the base station is the second communication device). FIG. 12 is a second schematic structural diagram of a hybrid mode of bistatic sensing and monostatic sensing according to an embodiment of the present application. As shown in FIG. 12, the terminal transmits sensing signals on uplink symbol #1 and receives echo signals (after reflection from the sensed object) on symbols #2/#3. The sensing base station receives the sensing signal from #1. The terminal does not transmit uplink symbols on symbols #2 and #3.

For a base station, the base station may configure resource information of the sensing signal. The configuration parameters may include: the start time s of the sensing signal, the number m of time units occupied by the sensing signal, and the length b1 of the first blank time unit after the time units occupied by the sensing signal.

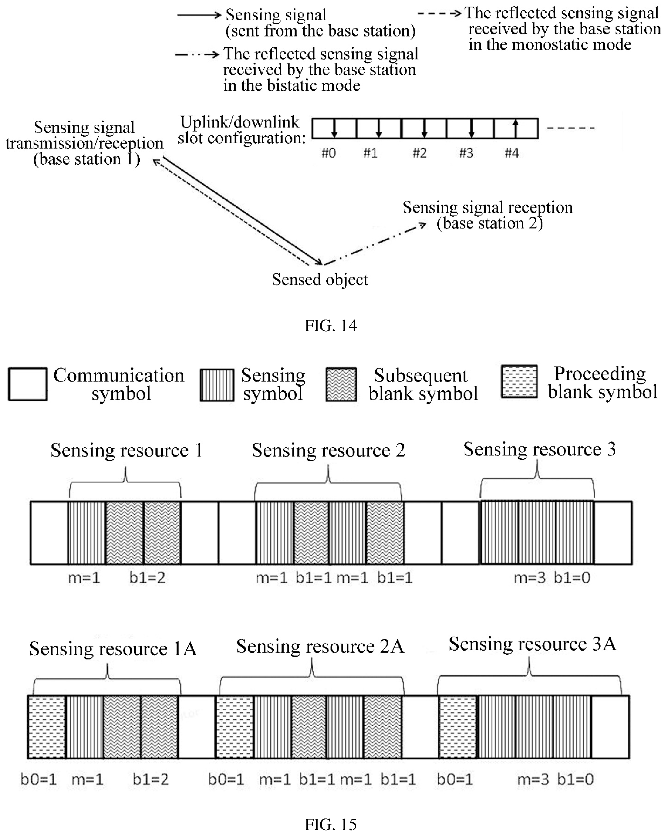

FIG. 15 is a schematic diagram of resources for a sensing signal according to an embodiment of the present application. As shown in FIG. 15, the time unit is a symbol.

The start time s of the sensing signal: the starting symbol position of the sensing signal sent from the first communication device. The base station starts receiving the sensing signal at the starting symbol position. Here, s=1 indicates the second symbol starting from a slot. It should be noted that the first symbol was s=0.

The number m of time units occupied by the sensing signal: the number of symbols of the sensing signal transmitted by the first communication device, where m=1. Typically, for monostatic sensing mode, the value of m is 1. For bistatic sensing mode, m may be 1, 2, or 4.

The length b1 of the first blank time unit after the time units occupied by the sensing signal: the number of symbols during which the first communication device stops transmitting any information after transmitting the sensing signal. The blank symbol period is used for the transmission/reception switch at the transmitter, and the reception of the echo signal. Here, b1=2.

In an embodiment, the value of b1 is related to the farthest sensing distance L and the subcarrier spacing width.

In an embodiment, resource information of sensing signals may be configured to the base station by the sensing service.

In an embodiment, resource information of sensing signals may be determined based on the furthest sensing distance of the service.

For example, b1 = duration(2*L)/duration(1 symbol), or b1 = duration(2*L)/duration(1 symbol) - m.

Duration () is used to calculate the time length. To ensure that the length of the blank symbol is greater than or equal to twice the echo delay, the calculated b can be rounded up.

For the terminal, the terminal may transmit sensing signals based on the resource information of the sensing signals (the terminal is the first communication device).

For example, the terminal determines the position of the sensing resources transmitted by the base station based on the configuration information of the sensing resources, and performs signal reception and measurement.

For example, the terminal determines the start time s for receiving the sensing signal, the number m of time units occupied by the sensing signal, and the length b1 of the first blank time unit after the time units occupied by the sensing signal.

For example, the time unit is a symbol.

The start time s of the sensing signal: the starting symbol position at which the terminal transmits the sensing signal.

The number m of time units occupied by the sensing signal: on m symbols, in addition to transmitting the sensing signal, the terminal may also transmit communication symbol information (such as PUCCH, PUSCH, SRS, PRACH) according to the scheduling signaling (or the higher-layer configuration signaling) of the base station.

The length b1 of the first blank time unit following the time units occupied by the sensing signal: on the first blank symbol b1, the terminal does not transmit communication symbols. That is, the terminal does not receive or transmit any communication information (such as PUCCH, PUSCH, SRS or PRACH) on the symbol.

In embodiments of the present application, the base station indicates the timing advance (TA_s) (i.e., the first TA) for transmitting the sensing and communication signal, and the terminal transmits the sensing signal based on TA_s.

For example, the timing advance (TA_s) for the terminal transmitting the sensing signal, i.e., the first TA, may be indicated to the terminal by the base station in the following way.
(1) The base station separately indicates (via higher-layer signaling, MAC-CE, or physical-layer signaling).
(2) The indication of "timing advance TA for transmitting communication information" applies to TA_s.
(3) Based on "timing advance TA for transmitting communication information", the base station indicates an offset.

For example, the timing advance (TA_s) for the terminal transmitting the sensing and communication signal, may be timing advance relative to a time point T0 as follows:
(1) an absolute time indicated by the base station, where the terminal may determine the time point T0_TX for transmitting the corresponding sensing symbol using the absolute time.
(2) downlink subframe timing time or symbol timing time T0_RX for terminal reception, determined by the terminal based on the downlink synchronization signal.

FIG. 13 is a schematic diagram of a relative position of timing advance for UE transmitting a sensing signal according to an embodiment of the present application. As shown in FIG. 13, T0_Tx is the subframe/symbol timing information of the base station obtained by the terminal. The relevant subframe timing information or symbol information represents the timing information of the base station during actual transmission, or the timing information expected to receive signals. In case that the UE transmits a sensing signal, TA_s is timing advance relative to T0_Tx.

In an embodiment, the UE may use at least one of the following methods to determine whether to transmit communication information simultaneously while transmitting sensing signals:
(1) In case that the difference between TA_s and TA_c is less than (or equal to) a certain threshold, the sensing signal and the communication information may be transmitted simultaneously. (Note: in this case, the relative positions of timing advance for the sensing signal and the communication information are different <the sensing signal is relative to T0_Tx, and the communication information is relative to T0_Rx).
(2) In case that the difference between TA_s and TA_c is less than (or equal to) a certain threshold, the sensing signal and the communication information may be transmitted simultaneously. (Note: in this case, the relative positions of timing advance for the sensing signal and the communication information are the same (both are T0_Tx or T0_Rx)).

It should be noted that: in case that the difference between TA_s and TA_c (or the difference between TA_s and TA_c/2) is less than a certain threshold, it means that the base stations receiving the sensing signal and the communication information are both serving base stations. In case that the difference is greater than a certain threshold, it means that the base stations receiving the sensing signal also include non-serving base stations, and therefore the sensing signal may not be sent together with the communication information.

In embodiments of the present application, the base station may also indicate the terminal to continue transmitting communication signals or stop transmitting communication signals while transmitting sensing signals. Alternatively, the protocol may indicate that the terminal continues to transmit communication signals or stops transmitting communication signals while transmitting sensing signals.

In an embodiment, the sensing scenario is in a hybrid mode of one base station and another base station, the sensing signal is transmitted on downlink symbol (base station 1 is the first communication device, and base station 2 is the second communication device). FIG. 14 is a third schematic structural diagram of a hybrid mode of bistatic sensing and monostatic sensing according to an embodiment of the present application. As shown in FIG. 14, base station 1 transmits sensing signals on downlink symbol #1 and receives echo signals (after reflection from the sensed object) on symbols #2/#3. Base station 2 receives the sensing signal on #1.

For base station 1, base station 1 may configure resource information of the sensing signal to base station 2. The configuration parameters may include: the start time s of the sensing signal, and the number m of time units occupied by the sensing signal.

For example, the time unit is a symbol.

The start time s of the sensing signal: the starting symbol position for base station 1 to transmit the sensing signal. Here, s=1 indicates the second symbol starting from a slot. It should be noted that the first symbol was s=0.

The number m of time units occupied by the sensing signal: the number of symbols of the sensing signal transmitted by base station 1. Typically, for monostatic sensing mode, the value of m is 1. For bistatic sensing mode, m may be 1, 2, or 4.

For base station 2, the length b1 of the first blank time unit after the time units occupied by the sensing signal does not need to be configured, or the configuration of the length b1 of the subsequent first blank time unit may be ignored.

In addition to receiving resource information of sensing signals, base station 2 may also receive the following information.
(1) Symbol nature of sensing signal: used for indicating the symbol nature of the sensing signal sent from base station 1, such as uplink symbol, downlink symbol, or downlink and uplink symbols.
(2) Slot ratio of base station 1: used for indicating the uplink and downlink slot ratio information of base station 1. The slot ratio of base station 1 is also used for determining the position of the sensing symbol.
(3) The carrier information and subframe timing information used by base station 1 to transmit sensing signals.

In an embodiment, the configuration information received by base station 2 may be configured by the sensing server or transmitted from base station 1 to base station 2.

For base station 2, base station 2 receives sensing signals based on the configuration information of sensing resources.

Base station 2 determines the resource position of the sensing signal transmitted from base station 1 based on the resource information of the sensing signal, and performs signal reception and measurement.

For example, base station 2 may determine the start time s for receiving the sensing signal and the number m of the time units occupied by the sensing signal.

In an embodiment, base station 2 may determine the valid position of the sensing information sent from base station 1 based on the indication information of "Symbol nature of sensing signal".

In an embodiment, in case that the indication information is "downlink", base station 2 may assume that the sensing signal is transmitted on the downlink symbol, that is, base station 2 receives the sensing signal on the downlink symbol and considers that the sensing signal on the uplink symbol is invalid.

In an embodiment, in case that the indication information is "uplink", base station 2 may assume that the sensing signal is transmitted on the uplink symbol, that is, base station 2 receives the sensing signal on the uplink symbol and considers that the sensing signal on the downlink symbol is invalid.

In an embodiment, in case that the indication information is "uplink and downlink", then base station 2 considers that the sensing signal is transmitted on both uplink and downlink symbols.

Embodiments of the present application provide a method for sensing a signal format (including: a subsequent blank symbol, or/and a proceeding blank symbol) for hybrid sensing modes (such as base station-UE in bistatic sensing mode, and base station in monostatic sensing mode), which may ensure that sensing services are effectively performed in hybrid modes. Meanwhile, a hybrid mode of base station-base station in bistatic sensing mode and base station in monostatic sensing mode is provided, in which mode the symbol attributes of the transmitted sensing signal are determined, and base station-base station in bistatic sensing mode with a flexible time-slot is utilized.

The terminal device according to the embodiments of the present application may be a device that provides voice and/or data connectivity to a user, a handheld device with a wireless connection function, or other processing devices connected to a wireless modem. In different systems, the name of the terminal device may also be different. For example, in the 5G system, the terminal device may be called user equipment (UE). A wireless terminal device can communicate with one or more core networks (CN) via a radio access network (RAN). The wireless terminal device can be a mobile terminal device, such as a mobile phone (or "cellular" phone) and a computer with a mobile terminal device, for example, a portable, pocket-sized, handheld, computer-built-in or vehicle-mounted mobile device, which exchanges voice and/or data with the radio access network. For example, a personal communication service (PCS) phone, a cordless phone, a session initiated protocol (SIP) phone, a wireless local loop (WLL) station, a personal digital assistant (PDA), and the like. The wireless terminal device may also be referred to as a system, a subscriber unit, a subscriber station, a mobile station, a mobile, a remote station, an access point, a remote terminal, an access terminal, a user terminal, a user agent, or a user device, but is not limited in the embodiments of the present application.

The network device of the embodiments of the present application may be a base station, which may include multiple cells providing services for terminals. Depending on the specific application scenario, the base station may also be called an access point, or may be a device in an access network that communicates with wireless terminal devices through one or more sectors on the air interface, or may be called another name. The network device can be used to convert received air frames into internet protocol (IP) packets and vice versa, acting as a router between the wireless terminal device and the rest of the access network, where the rest of the access network may include an internet protocol (IP) communication network. The network device can also coordinate the management of attributes of the air interface. For example, the network device in the embodiments of the present application may be a network device (Base Transceiver Station, BTS) in the global system for mobile communications (GSM) or code division multiple access (CDMA), or a network device (NodeB) in wide-band code division multiple access (WCDMA), or an evolved network device (eNB or e-NodeB) in the long term evolution (LTE) system, or a 5G base station (gNB) in the 5G network architecture (next generation system), or a home evolved node B (HeNB), a relay node, a femto, a pico, etc., but is not limited in the embodiments of the present application. In some network structures, a network device may include a centralized unit (CU) node and a distributed unit (DU) node. The centralized unit and the distributed unit may also be geographically separated.

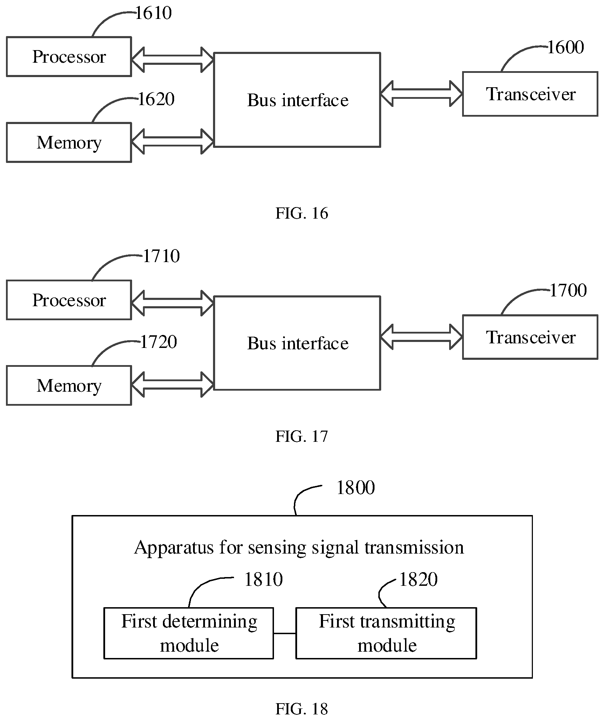

FIG. 16 is a schematic structural diagram of a first communication device according to an embodiment of the present application. As shown in FIG. 16, the first communication device includes a memory 1620, a transceiver 1600, and a processor 1610.

The memory 1620 is used for storing a computer program; the transceiver 1600 is used for receiving and transmitting data under control of the processor 1610; and the processor 1610 is used for reading the computer program in the memory 1620 and performing following operations:
determining resource information of a sensing signal, where the resource information includes at least one of following: a start time of the sensing signal, a number of time units occupied by the sensing signal, or a length of a first blank time unit after the sensing signal; the first blank time unit is used for at least one of following: switching from transmitting to receiving, or, receiving an echo signal of the sensing signal; and
transmitting the sensing signal based on the resource information.

In an example, the transceiver 1600 is used for receiving and transmitting data under control of the processor 1610.

In FIG. 16, a bus architecture may include any number of interconnected buses and bridges, linking together by various circuits of one or more processors represented by processor 1610 and memory represented by memory 1620. The bus architecture may also link together various other circuits such as peripheral devices, voltage regulators, and power management circuits, which are all well known in the art and, therefore, will not be described further herein. The bus interface provides the interface. The transceiver 1600 may be a plurality of components, including a transmitter and a receiver, providing a unit for communicating with various other devices over a transmission medium, such as a wireless channel, a wired channel, an optical cable, or the like. The processor 1610 is responsible for managing the bus architecture and general processing, and the memory 1620 can store data used by the processor 1610 when performing operations.

The processor 1610 may be a central processing unit (CPU), an application specific integrated circuit (ASIC), a field programmable gate array (FPGA), or a complex programmable logic device (CPLD). The processor may also adopt a multi-core architecture.

In an embodiment, the processor 1610 is further used for:
receiving the echo signal of the sensing signal within the first blank time unit.

In an embodiment, the processor 1610 is further used for: obtaining a first timing advance (TA) of the sensing signal; and/or,
obtaining a length of a second blank time unit before the time units occupied by the sensing signal.

In an embodiment, in case that the first communication device includes a terminal, the processor 1610 is further used for:
receiving TA information sent from a network side device, and determining the first TA of the sensing signal based on the TA information;
where the TA information includes one or more of following:
   the first TA;
   a second TA used to transmit a message or data; or
   a timing advance offset, where the timing advance offset is an offset of the first TA relative to the second TA.

In an embodiment, in case that the first communication device includes a terminal, the processor 1610 is further used for:
receiving resource configuration information of the sensing signal sent from a network side device; and
determining the resource information of the sensing signal based on the resource configuration information.

In an embodiment, the processor 1610 is further used for:
in case of determining the number of time units occupied by the sensing signal to be greater than 1 based on the resource configuration information, determining the length of the first blank time unit to be 0.

In an embodiment, the processor 1610 is further used for:
in case of determining the length of the first blank time unit to be greater than 0 based on the resource configuration information, determining the number of time units occupied by the sensing signal to be 1.

In an embodiment, in case that the first communication device includes a terminal, the processor 1610 is further used for:
determining whether to transmit a message or data within the time units occupied by the sensing signal.

In an embodiment, the processor 1610 is further used for:
determining whether to transmit the message or data within the time units occupied by the sensing signal based on the first TA and a second TA.

In an embodiment, the processor 1610 is further used for one or more of the following:
in case that an absolute value of a difference between the first TA and the second TA is less than or equal to a predetermined threshold, determining to transmit the message or data within the time units occupied by the sensing signal; or
in case that an absolute value of a difference between the first TA and a first value is less than or equal to a predetermined threshold, determining to transmit the message or data within the time units occupied by the sensing signal, where the first value is calculated based on the second TA.

In an embodiment, in case that the first communication device includes a first network side device and a receiving node of the sensing signal includes the first network side device or a second network side device, the processor 1610 is further used for:
before transmitting the sensing signal, determining whether the time units occupied by the sensing signal belong to uplink time units or downlink time units.

In an embodiment, the processor 1610 is further used for:
based on a predefined protocol, determining that the time units occupied by the sensing signal belong to the downlink time units; or
based on attribute indication information, determining that the time units occupied by the sensing signal belong to the uplink time units and/or the downlink time units.

In an embodiment, the length of the second blank time unit is an integer multiple of a length of a time unit;
and/or,
a sum of the length of the second blank time unit and the length of the first blank time unit is an integer multiple of a length of a time unit.

In an embodiment, in case that the length of the second blank time unit is not an integer multiple of a length of a time unit, the time units occupied by the sensing signal are not used for transmitting or receiving a message or data.

In an embodiment, in case that the first communication device includes a terminal, the processor 1610 is further used for:
transmitting a message or data within the time units occupied by the sensing signal.

In an embodiment, the processor 1610 is further used for:
obtaining a feature parameter or model parameter of a sensed object; and
in case that a measurement quantity contained in a received sensing signal matches the feature parameter or model parameter of the sensed object, transmitting the measurement quantity.

It should be noted here that the above-mentioned first communication device provided in the embodiment of the present application may implement all the method steps implemented by the method embodiment in which the execution body is the first communication device, and may achieve the same technical effect. The parts and beneficial effects of this embodiment that are the same as those of the method embodiment will not be described in detail here.

FIG. 17 is a schematic structural diagram of a second communication device according to an embodiment of the present application. As shown in FIG. 17, the second communication device includes a memory 1720, a transceiver 1700, and a processor 1710.

The memory 1720 is used for storing a computer program; the transceiver 1700 is used for receiving and transmitting data under control of the processor 1710; and the processor 1710 is used for reading the computer program in the memory 1720 and performing following operations:
determining resource information of a sensing signal, where the resource information includes at least one of following: a start time of the sensing signal, a number of time units occupied by the sensing signal, or a length of a first blank time unit after the sensing signal; and
receiving the sensing signal based on the resource information.

In an example, the transceiver 1700 is used for receiving and transmitting data under control of the processor 1710.

In FIG. 17, a bus architecture may include any number of interconnected buses and bridges, linking together by various circuits of one or more processors represented by processor 1710 and memory represented by memory 1720. The bus architecture may also link together various other circuits such as peripheral devices, voltage regulators, and power management circuits, which are all well known in the art and, therefore, will not be described further herein. The bus interface provides the interface. The transceiver 1700 may be a plurality of components, including a transmitter and a receiver, providing a unit for communicating with various other devices over a transmission medium, such as a wireless channel, a wired channel, an optical cable, or the like. The processor 1710 is responsible for managing the bus architecture and general processing, and the memory 1720 can store data used by the processor 1710 when performing operations.

The processor 1710 may be a central processing unit (CPU), an application specific integrated circuit (ASIC), a field programmable gate array (FPGA), or a complex programmable logic device (CPLD). The processor may also adopt a multi-core architecture.

In an embodiment, the processor 1710 is further used for:
obtaining a length of a second blank time unit before the time units occupied by the sensing signal.

In an embodiment, in case that the second communication device includes a terminal, the processor 1710 is further used for:
receiving a message or data within the time units occupied by the sensing signal.

In an embodiment, the processor 1710 is further used for:
receiving resource configuration information of the sensing signal sent from a network side device; and
determining the resource information of the sensing signal based on the resource configuration information.

In an embodiment, the processor 1710 is further used for:
in case of determining the number of time units occupied by the sensing signal to be greater than 1 based on the resource configuration information, determining the length of the first blank time unit to be 0.

In an embodiment, the processor 1710 is further used for:
in case of determining the length of the first blank time unit to be greater than 0 based on the resource configuration information, determining the number of time units occupied by the sensing signal to be 1.

In an embodiment, the length of the second blank time unit is an integer multiple of a length of a time unit;
and/or,
a sum of the length of the second blank time unit and the length of the first blank time unit is an integer multiple of a length of a time unit.

In an embodiment, in case that the length of the second blank time unit is not an integer multiple of a length of a time unit, the time units occupied by the sensing signal are not used for transmitting or receiving a message or data.

In an embodiment, the processor 1710 is further used for:
obtaining a feature parameter or model parameter of a sensed object; and
in case that a measurement quantity contained in a received sensing signal matches the feature parameter or model parameter of the sensed object, transmitting the measurement quantity.

It should be noted here that the above-mentioned second communication device provided in the embodiment of the present application may implement all the method steps implemented by the method embodiment in which the execution body is the second communication device, and may achieve the same technical effect. The parts and beneficial effects of this embodiment that are the same as those of the method embodiment will not be described in detail here.

FIG. 18 is a first schematic structural diagram of an apparatus for sensing signal transmission according to an embodiment of the present application. As shown in FIG. 18, the apparatus 1800 for sensing signal transmission used in the first communication device includes:
a first determining module 1810, used for determining resource information of a sensing signal, where the resource information includes at least one of following: a start time of the sensing signal, a number of time units occupied by the sensing signal, or a length of a first blank time unit after the sensing signal; the first blank time unit is used for at least one of following: switching from transmitting to receiving, or, receiving an echo signal of the sensing signal; and
a first transmitting module 1820, used for transmitting the sensing signal based on the resource information.

It should be noted here that the above-mentioned apparatus for sensing signal transmission provided in the embodiment of the present application can implement all the method steps implemented by the method embodiment for sensing signal transmission, and can achieve the same technical effect. The parts and beneficial effects of this embodiment that are the same as those of the method embodiment will not be described in detail here.

In an embodiment, the apparatus further includes:
a second receiving module, used for receiving the echo signal of the sensing signal within the first blank time unit.

In an embodiment, the apparatus further includes a first obtaining module, used for one or more of following:
obtaining a first timing advance (TA) of the sensing signal; and/or,
obtaining a length of a second blank time unit before the time units occupied by the sensing signal.

In an embodiment, in case that the first communication device includes a terminal, the first obtaining module is used for:
receiving TA information sent from a network side device, and determining the first TA of the sensing signal based on the TA information;
where the TA information includes one or more of following:
   the first TA;
   a second TA used to transmit a message or data; or
   a timing advance offset, where the timing advance offset is an offset of the first TA relative to the second TA.

In an embodiment, in case that the first communication device includes a terminal, the first determining module 1810 is used for:
receiving resource configuration information of the sensing signal sent from a network side device; and
determining the resource information of the sensing signal based on the resource configuration information.

In an embodiment, the first determining module 1810 is used for:
in case of determining the number of time units occupied by the sensing signal to be greater than 1 based on the resource configuration information, determining the length of the first blank time unit to be 0.

In an embodiment, the first determining module 1810 is used for:
in case of determining the length of the first blank time unit to be greater than 0 based on the resource configuration information, determining the number of time units occupied by the sensing signal to be 1.

In an embodiment, the apparatus further includes:
a first confirming module, used for in case that the first communication device includes a terminal, determining whether to transmit the message or data within the time units occupied by the sensing signal.

In an embodiment, the first confirming module is used for:
determining whether to transmit the message or data within the time units occupied by the sensing signal based on the first TA and a second TA.

In an embodiment, the first confirming module is used for one or more of following:
in case that an absolute value of a difference between the first TA and the second TA is less than or equal to a predetermined threshold, determining to transmit the message or data within the time units occupied by the sensing signal; or
in case that an absolute value of a difference between the first TA and a first value is less than or equal to a predetermined threshold, determining to transmit the message or data within the time units occupied by the sensing signal, where the first value is calculated based on the second TA.

In an embodiment, the apparatus further includes:
a third determining module, used for, in case that the first communication device comprises a first network side device and a receiving node of the sensing signal comprises the first network side device or a second network side device, determining whether the time units occupied by the sensing signal belong to uplink time units or downlink time units before transmitting the sensing signal.

In an embodiment, the third determining module is used for:
based on a predefined protocol, determining that the time units occupied by the sensing signal belong to the downlink time units; or
based on attribute indication information, determining that the time units occupied by the sensing signal belong to the uplink time units and/or the downlink time units.

In an embodiment, the length of the second blank time unit is an integer multiple of a length of a time unit;
and/or,
a sum of the length of the second blank time unit and the length of the first blank time unit is an integer multiple of a length of a time unit.

In an embodiment, in case that the length of the second blank time unit is not an integer multiple of a length of a time unit, the time units occupied by the sensing signal are not used for transmitting or receiving a message or data.

In an embodiment, the apparatus further includes:
a second transmitting module, used for, in case that the first communication device includes a terminal, transmitting a message or data within the time units occupied by the sensing signal.

In an embodiment, the apparatus further includes:
a second obtaining module, used for obtaining a feature parameter or model parameter of a sensed object; and
a third transmitting module, used for, in case that a measurement quantity contained in a received sensing signal matches the feature parameter or model parameter of the sensed object, transmitting the measurement quantity.

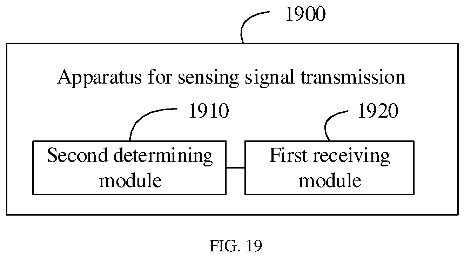

FIG. 19 is a second schematic structural diagram of an apparatus for sensing signal transmission according to an embodiment of the present application. As shown in FIG. 19, the apparatus 1900 for sensing signal transmission used in the second communication device includes:
a second determining module 1910, used for determining resource information of a sensing signal, where the resource information includes at least one of following: a start time of the sensing signal, a number of time units occupied by the sensing signal, or a length of a first blank time unit after the sensing signal; and
a first receiving module 1920, used for receiving the sensing signal based on the resource information.

It should be noted here that the above-mentioned apparatus for sensing signal transmission provided in the embodiment of the present application can implement all the method steps implemented by the method embodiment for sensing signal transmission, and can achieve the same technical effect. The parts and beneficial effects of this embodiment that are the same as those of the method embodiment will not be described in detail here.

In an embodiment, the apparatus further includes:
a third obtaining module, used for obtaining a length of a second blank time unit before the time units occupied by the sensing signal.

In an embodiment, the apparatus further includes:
a fourth receiving module, used for not receiving a message or data within the first blank time unit or a second blank time unit.

In an embodiment, the apparatus further includes:
a third receiving module, used for, in case that the second communication device includes a terminal, receiving a message or data within the time units occupied by the sensing signal.

In an embodiment, the second determining module 1910 is used for:
receiving resource configuration information of the sensing signal sent from a network side device; and
determining the resource information of the sensing signal based on the resource configuration information.

In an embodiment, the second determining module 1910 is used for:
in case of determining the number of time units occupied by the sensing signal to be greater than 1 based on the resource configuration information, determining the length of the first blank time unit to be 0.

In an embodiment, the second determining module 1910 is used for:
in case of determining the length of the first blank time unit to be greater than 0 based on the resource configuration information, determining the number of time units occupied by the sensing signal to be 1.

In an embodiment, the length of the second blank time unit is an integer multiple of a length of a time unit;
and/or,
a sum of the length of the second blank time unit and the length of the first blank time unit is an integer multiple of a length of a time unit.

In an embodiment, in case that the length of the second blank time unit is not an integer multiple of a length of a time unit, the time units occupied by the sensing signal are not used for transmitting or receiving a message or data.

In an embodiment, the apparatus further includes:
a fourth obtaining module, used for obtaining a feature parameter or model parameter of a sensed object; and
a fourth transmitting module, used for, in case that a measurement quantity contained in a received sensing signal matches the feature parameter or model parameter of the sensed object, transmitting the measurement quantity.

It should be noted that, the division of units/modules in the embodiments of the present application is schematic, and is only a logical function division, and there can be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as USB flash disk, mobile hard disk, read-only memory (ROM), random access memory (RAM), magnetic disk, or optical disk.

It should be noted here that the above-mentioned terminal provided in the embodiment of the present application may implement all the method steps implemented by the method embodiment in which the execution body is the terminal, and can achieve the same technical effect. The parts and beneficial effects of this embodiment that are the same as those of the method embodiment will not be described in detail here.

According to an embodiment of the present application, a computer readable storage medium is provided, where the computer readable storage medium stores a computer program that cause a processor to perform the method provided in the above-mentioned embodiments.

In an embodiment, the computer readable storage medium can be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As well appreciated by those skilled in the art, embodiments of the present application can be provided as a method, system, or computer program product. Accordingly, the present application can take the form of an entirely hardware embodiment, an entirely software embodiment, or an embodiment combining software and hardware aspects. Furthermore, the present application can take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof can be implemented by computer-executable instructions. These computer-executable instructions can be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions can also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more blocks of the block diagram.

These processor-executable instructions can be loaded onto a computer or other programmable data processing device to cause a series of operational steps to be performed on the computer or other programmable device to produce a computer-implemented process and instructions performed on the computer or other programmable devices provide steps for performing the functions specified in one or more flows in the flowchart and/or one or more blocks of the block diagram.

It should be noted that those skilled in the art may make various modifications and variations to the present application without departing from the scope of the present application. If these modifications and variations on the present application are within the scope of the claims of the present application and their equivalent solutions, the present application is also intended to cover such modifications and variations.

## Claims

1. A method for sensing signal transmission, performed by a first communication device, comprising:
determining resource information of a sensing signal, wherein the resource information comprises at least one of following: a start time of the sensing signal, a number of time units occupied by the sensing signal, or a length of a first blank time unit after the sensing signal; the first blank time unit is used for at least one of following: switching from transmitting to receiving, or, receiving an echo signal of the sensing signal; and
transmitting the sensing signal based on the resource information.

2. The method of claim 1, further comprising:
receiving the echo signal of the sensing signal within the first blank time unit.

3. The method of claim 1 or 2, further comprising:
obtaining a first timing advance (TA) of the sensing signal; and/or,
obtaining a length of a second blank time unit before the time units occupied by the sensing signal.

4. The method of claim 3, wherein in case that the first communication device comprises a terminal, obtaining the first TA of the sensing signal comprises:
receiving TA information sent from a network side device, and determining the first TA of the sensing signal based on the TA information;
wherein the TA information comprises one or more of following:
the first TA;
a second TA used to transmit a message or data; or
a timing advance offset, wherein the timing advance offset is an offset of the first TA relative to the second TA.

5. The method of any of claims 1 to 4, wherein in case that the first communication device comprises a terminal, determining the resource information of the sensing signal comprises:
receiving resource configuration information of the sensing signal sent from a network side device; and
determining the resource information of the sensing signal based on the resource configuration information.

6. The method of claim 5, wherein determining the resource information of the sensing signal comprises:
in case of determining the number of time units occupied by the sensing signal to be greater than 1 based on the resource configuration information, determining the length of the first blank time unit to be 0.

7. The method of claim 5, wherein determining the resource information of the sensing signal comprises:
in case of determining the length of the first blank time unit to be greater than 0 based on the resource configuration information, determining the number of time units occupied by the sensing signal to be 1.

8. The method of claim 3, wherein in case that the first communication device comprises a terminal, the method further comprises:
determining whether to transmit a message or data within the time units occupied by the sensing signal.

9. The method of claim 8, wherein determining whether to transmit the message or data within the time units occupied by the sensing signal comprises:
determining whether to transmit the message or data within the time units occupied by the sensing signal based on the first TA and a second TA.

10. The method of claim 9, wherein determining whether to transmit the message or data within the time units occupied by the sensing signal based on the first TA and the second TA comprises one or more of following:
in case that an absolute value of a difference between the first TA and the second TA is less than or equal to a predetermined threshold, determining to transmit the message or data within the time units occupied by the sensing signal; or
in case that an absolute value of a difference between the first TA and a first value is less than or equal to a predetermined threshold, determining to transmit the message or data within the time units occupied by the sensing signal, wherein the first value is calculated based on the second TA.

11. The method of any of claims 1 to 3, wherein in case that the first communication device comprises a first network side device and a receiving node of the sensing signal comprises the first network side device or a second network side device, the method further comprises:
before transmitting the sensing signal, determining whether the time units occupied by the sensing signal belong to uplink time units or downlink time units.

12. The method of claim 11, wherein determining whether the time units occupied by the sensing signal belong to the uplink time units or the downlink time units comprises:
based on a predefined protocol, determining that the time units occupied by the sensing signal belong to the downlink time units; or
based on attribute indication information, determining that the time units occupied by the sensing signal belong to the uplink time units and/or the downlink time units.

13. The method of claim 3, wherein the length of the second blank time unit is an integer multiple of a length of a time unit;
and/or,
a sum of the length of the second blank time unit and the length of the first blank time unit is an integer multiple of a length of a time unit.

14. The method of claim 3 or 13, wherein in case that the length of the second blank time unit is not an integer multiple of a length of a time unit, the time units occupied by the sensing signal are not used for transmitting or receiving a message or data.

15. The method of any of claims 1 to 3, wherein in case that the first communication device comprises a terminal, the method further comprises:
transmitting a message or data within the time units occupied by the sensing signal.

16. The method of any of claims 1 to 3, further comprising:
obtaining a feature parameter or model parameter of a sensed object; and
in case that a measurement quantity contained in a received sensing signal matches the feature parameter or model parameter of the sensed object, transmitting the measurement quantity.

17. A method for sensing signal transmission, performed by a second communication device, comprising:
determining resource information of a sensing signal, wherein the resource information comprises at least one of following: a start time of the sensing signal, a number of time units occupied by the sensing signal, or a length of a first blank time unit after the sensing signal; and
receiving the sensing signal based on the resource information.

18. The method of claim 17, further comprising:
obtaining a length of a second blank time unit before the time units occupied by the sensing signal.

19. The method of claim 17 or 18, further comprising:
not receiving a message or data within the first blank time unit or a second blank time unit.

20. The method of claim 17 or 18, wherein in case that the second communication device comprises a terminal, the method further comprises:
receiving a message or data within the time units occupied by the sensing signal.

21. The method of claim 17 or 18, wherein determining the resource information of the sensing signal comprises:
receiving resource configuration information of the sensing signal sent from a network side device; and
determining the resource information of the sensing signal based on the resource configuration information.

22. The method of claim 21, wherein determining the resource information of the sensing signal comprises:
in case of determining the number of time units occupied by the sensing signal to be greater than 1 based on the resource configuration information, determining the length of the first blank time unit to be 0.

23. The method of claim 21, wherein determining the resource information of the sensing signal comprises:
in case of determining the length of the first blank time unit to be greater than 0 based on the resource configuration information, determining the number of time units occupied by the sensing signal to be 1.

24. The method of claim 18, wherein the length of the second blank time unit is an integer multiple of a length of a time unit;
and/or,
a sum of the length of the second blank time unit and the length of the first blank time unit is an integer multiple of a length of a time unit.

25. The method of claim 24, wherein in case that the length of the second blank time unit is not an integer multiple of a length of a time unit, the time units occupied by the sensing signal are not used for transmitting or receiving a message or data.

26. The method of claim 17 or 18, further comprising:
obtaining a feature parameter or model parameter of a sensed object; and
in case that a measurement quantity contained in a received sensing signal matches the feature parameter or model parameter of the sensed object, transmitting the measurement quantity.

27. A first communication device, comprising: a memory, a transceiver, and a processor:
wherein the memory is used for storing a computer program; the transceiver is used for receiving and transmitting data under control of the processor; and the processor is used for reading the computer program in the memory and performing following operations:
determining resource information of a sensing signal, wherein the resource information comprises at least one of following: a start time of the sensing signal, a number of time units occupied by the sensing signal, or a length of a first blank time unit after the sensing signal; the first blank time unit is used for at least one of following: switching from transmitting to receiving, or, receiving an echo signal of the sensing signal; and
transmitting the sensing signal based on the resource information.

28. The first communication device of claim 27, wherein the operations further comprise:
receiving the echo signal of the sensing signal within the first blank time unit.

29. The first communication device of claim 27 or 28, wherein the operations further comprise:
obtaining a first timing advance (TA) of the sensing signal; and/or,
obtaining a length of a second blank time unit before the time units occupied by the sensing signal.

30. The first communication device of claim 29, wherein in case that the first communication device comprises a terminal, obtaining the first TA of the sensing signal comprises:
receiving TA information sent from a network side device, and determining the first TA of the sensing signal based on the TA information;
wherein the TA information comprises one or more of following:
the first TA;
a second TA used to transmit a message or data; or
a timing advance offset, wherein the timing advance offset is an offset of the first TA relative to the second TA.

31. The first communication device of any of claims 27 to 30, wherein in case that the first communication device comprises a terminal, determining the resource information of the sensing signal comprises:
receiving resource configuration information of the sensing signal sent from a network side device; and
determining the resource information of the sensing signal based on the resource configuration information.

32. The first communication device of claim 31, wherein determining the resource information of the sensing signal comprises:
in case of determining the number of time units occupied by the sensing signal to be greater than 1 based on the resource configuration information, determining the length of the first blank time unit to be 0.

33. The first communication device of claim 31, wherein determining the resource information of the sensing signal comprises:
in case of determining the length of the first blank time unit to be greater than 0 based on the resource configuration information, determining the number of time units occupied by the sensing signal to be 1.

34. The first communication device of claim 29, wherein in case that the first communication device comprises a terminal, the operations further comprise:
determining whether to transmit a message or data within the time units occupied by the sensing signal.

35. The first communication device of claim 34, wherein determining whether to transmit the message or data within the time units occupied by the sensing signal comprises:
determining whether to transmit the message or data within the time units occupied by the sensing signal based on the first TA and a second TA.

36. The first communication device of claim 35, wherein determining whether to transmit the message or data within the time units occupied by the sensing signal based on the first TA and the second TA comprises one or more of following:
in case that an absolute value of a difference between the first TA and the second TA is less than or equal to a predetermined threshold, determining to transmit the message or data within the time units occupied by the sensing signal; or
in case that an absolute value of a difference between the first TA and a first value is less than or equal to a predetermined threshold, determining to transmit the message or data within the time units occupied by the sensing signal, wherein the first value is calculated based on the second TA.

37. The first communication device of any of claims 27 to 29, wherein in case that the first communication device comprises a first network side device and a receiving node of the sensing signal comprises the first network side device or a second network side device, the operations further comprise:
before transmitting the sensing signal, determining whether the time units occupied by the sensing signal belong to uplink time units or downlink time units.

38. The first communication device of claim 37, wherein determining whether the time units occupied by the sensing signal belong to the uplink time units or the downlink time units comprises:
based on a predefined protocol, determining that the time units occupied by the sensing signal belong to the downlink time units; or
based on attribute indication information, determining that the time units occupied by the sensing signal belong to the uplink time units and/or the downlink time units.

39. The first communication device of claim 29, wherein the length of the second blank time unit is an integer multiple of a length of a time unit;
and/or,
a sum of the length of the second blank time unit and the length of the first blank time unit is an integer multiple of a length of a time unit.

40. The first communication device of claim 29 or 39, wherein in case that the length of the second blank time unit is not an integer multiple of a length of a time unit, the time units occupied by the sensing signal are not used for transmitting or receiving a message or data.

41. The first communication device of any of claims 27 to 29, wherein in case that the first communication device comprises a terminal, the operations further comprise:
transmitting a message or data within the time units occupied by the sensing signal.

42. The first communication device of any of claims 27 to 29, wherein the operations further comprise:
obtaining a feature parameter or model parameter of a sensed object; and
in case that a measurement quantity contained in a received sensing signal matches the feature parameter or model parameter of the sensed object, transmitting the measurement quantity.

43. A second communication device, comprising: a memory, a transceiver, and a processor:
wherein the memory is used for storing a computer program; the transceiver is used for receiving and transmitting data under control of the processor; and the processor is used for reading the computer program in the memory and performing following operations:
determining resource information of a sensing signal, wherein the resource information comprises at least one of following: a start time of the sensing signal, a number of time units occupied by the sensing signal, or a length of a first blank time unit after the sensing signal; and
receiving the sensing signal based on the resource information.

44. The second communication device of claim 43, wherein the operations further comprise:
obtaining a length of a second blank time unit before the time units occupied by the sensing signal.

45. The second communication device of claim 43 or 44, wherein the operations further comprise:
not receiving a message or data within the first blank time unit or a second blank time unit.

46. The second communication device of claim 43 or 44, wherein in case that the second communication device comprises a terminal, the operations further comprise:
receiving a message or data within the time units occupied by the sensing signal.

47. The second communication device of claim 43 or 44, wherein determining the resource information of the sensing signal comprises:
receiving resource configuration information of the sensing signal sent from a network side device; and
determining the resource information of the sensing signal based on the resource configuration information.

48. The second communication device of claim 47, wherein determining the resource information of the sensing signal comprises:
in case of determining the number of time units occupied by the sensing signal to be greater than 1 based on the resource configuration information, determining the length of the first blank time unit to be 0.

49. The second communication device of claim 47, wherein determining the resource information of the sensing signal comprises:
in case of determining the length of the first blank time unit to be greater than 0 based on the resource configuration information, determining the number of time units occupied by the sensing signal to be 1.

50. The second communication device of claim 44, wherein the length of the second blank time unit is an integer multiple of a length of a time unit;
and/or,
a sum of the length of the second blank time unit and the length of the first blank time unit is an integer multiple of a length of a time unit.

51. The second communication device of claim 50, wherein in case that the length of the second blank time unit is not an integer multiple of a length of a time unit, the time units occupied by the sensing signal are not used for transmitting or receiving a message or data.

52. The second communication device of claim 43 or 44, wherein the operations further comprise:
obtaining a feature parameter or model parameter of a sensed object; and
in case that a measurement quantity contained in a received sensing signal matches the feature parameter or model parameter of the sensed object, transmitting the measurement quantity.

53. An apparatus for sensing signal transmission, used in a first communication device, comprising:
a first determining module, used for determining resource information of a sensing signal, wherein the resource information comprises at least one of following: a start time of the sensing signal, a number of time units occupied by the sensing signal, or a length of a first blank time unit after the sensing signal; the first blank time unit is used for at least one of following: switching from transmitting to receiving, or, receiving an echo signal of the sensing signal; and
a first transmitting module, used for transmitting the sensing signal based on the resource information.

54. The apparatus of claim 53, further comprising:
a second receiving module, used for receiving the echo signal of the sensing signal within the first blank time unit.

55. The apparatus of claim 53 or 54, wherein the apparatus further comprises a first obtaining module, used for one or more of following:
obtaining a first timing advance (TA) of the sensing signal; and/or,
obtaining a length of a second blank time unit before the time units occupied by the sensing signal.

56. The apparatus of claim 55, wherein in case that the first communication device comprises a terminal, obtaining the first TA of the sensing signal comprises:
receiving TA information sent from a network side device, and determining the first TA of the sensing signal based on the TA information;
wherein the TA information comprises one or more of following:
the first TA;
a second TA used to transmit a message or data; or
a timing advance offset, wherein the timing advance offset is an offset of the first TA relative to the second TA.

57. The apparatus of any of claims 53 to 56, wherein in case that the first communication device comprises a terminal, the first determining module is used for:
receiving resource configuration information of the sensing signal sent from a network side device; and
determining the resource information of the sensing signal based on the resource configuration information.

58. The apparatus of claim 57, wherein the first determining module is used for:
in case of determining the number of time units occupied by the sensing signal to be greater than 1 based on the resource configuration information, determining the length of the first blank time unit to be 0.

59. The apparatus of claim 57, wherein the first determining module is used for:
in case of determining the length of the first blank time unit to be greater than 0 based on the resource configuration information, determining the number of time units occupied by the sensing signal to be 1.

60. The apparatus of claim 55, wherein the apparatus further comprises:
a first confirming module, used for, in case that the first communication device comprises a terminal, determining whether to transmit the message or data within the time units occupied by the sensing signal.

61. The apparatus of claim 60, wherein the first confirming module is used for:
determining whether to transmit the message or data within the time units occupied by the sensing signal based on the first TA and a second TA.

62. The apparatus of claim 61, wherein the first confirming module is used for one or more of following:
in case that an absolute value of a difference between the first TA and the second TA is less than or equal to a predetermined threshold, determining to transmit the message or data within the time units occupied by the sensing signal; or
in case that an absolute value of a difference between the first TA and a first value is less than or equal to a predetermined threshold, determining to transmit the message or data within the time units occupied by the sensing signal, wherein the first value is calculated based on the second TA.

63. The apparatus of any of claims 53 to 55, wherein the apparatus further comprises:
a third determining module, used for, in case that the first communication device comprises a first network side device and a receiving node of the sensing signal comprises the first network side device or a second network side device, determining whether the time units occupied by the sensing signal belong to uplink time units or downlink time units before transmitting the sensing signal .

64. The apparatus of claim 63, wherein the third determining module is used for:
based on a predefined protocol, determining that the time units occupied by the sensing signal belong to the downlink time units; or
based on attribute indication information, determining that the time units occupied by the sensing signal belong to the uplink time units and/or the downlink time units.

65. The apparatus of claim 55, wherein the length of the second blank time unit is an integer multiple of a length of a time unit;
and/or,
a sum of the length of the second blank time unit and the length of the first blank time unit is an integer multiple of a length of a time unit.

66. The apparatus of claim 55 or 65, wherein in case that the length of the second blank time unit is not an integer multiple of a length of a time unit, the time units occupied by the sensing signal are not used for transmitting or receiving a message or data.

67. The apparatus of any of claims 53 to 55, wherein the apparatus further comprises:
a second transmitting module, used for, in case that the first communication device comprises a terminal, transmitting a message or data within the time units occupied by the sensing signal.

68. The apparatus of any of claims 53 to 55, wherein the apparatus further comprises:
a second obtaining module, used for obtaining a feature parameter or model parameter of a sensed object; and
a third transmitting module, used for, in case that a measurement quantity contained in a received sensing signal matches the feature parameter or model parameter of the sensed object, transmitting the measurement quantity.

69. An apparatus for sensing signal transmission, used in a second communication device, comprising:
a second determining module, used for determining resource information of a sensing signal, wherein the resource information comprises at least one of following: a start time of the sensing signal, a number of time units occupied by the sensing signal, or a length of a first blank time unit after the sensing signal; and
a first receiving module, used for receiving the sensing signal based on the resource information.

70. The apparatus of claim 69, wherein the apparatus further comprises:
a third obtaining module, used for obtaining a length of a second blank time unit before the time units occupied by the sensing signal.

71. The apparatus of claim 69 or 70, wherein the apparatus further comprises:
a fourth receiving module, used for not receiving a message or data within the first blank time unit or a second blank time unit.

72. The apparatus of claim 69 or 70, wherein the apparatus further comprises:
a third receiving module, used for, in case that the second communication device comprises a terminal, receiving a message or data within the time units occupied by the sensing signal.

73. The apparatus of claim 69 or 70, wherein the second determining module is used for:
receiving resource configuration information of the sensing signal sent from a network side device; and
determining the resource information of the sensing signal based on the resource configuration information.

74. The apparatus of claim 73, wherein the second determining module is used for:
in case of determining the number of time units occupied by the sensing signal to be greater than 1 based on the resource configuration information, determining the length of the first blank time unit to be 0.

75. The apparatus of claim 73, wherein the second determining module is used for:
in case of determining the length of the first blank time unit to be greater than 0 based on the resource configuration information, determining the number of time units occupied by the sensing signal to be 1.

76. The apparatus of claim 70, wherein the length of the second blank time unit is an integer multiple of a length of a time unit;
and/or,
a sum of the length of the second blank time unit and the length of the first blank time unit is an integer multiple of a length of a time unit.

77. The apparatus of claim 76, wherein in case that the length of the second blank time unit is not an integer multiple of a length of a time unit, the time units occupied by the sensing signal are not used for transmitting or receiving a message or data.

78. The apparatus of claim 69 or 70, wherein the apparatus further comprises:
a fourth obtaining module, used for obtaining a feature parameter or model parameter of a sensed object; and
a fourth transmitting module, used for, in case that a measurement quantity contained in a received sensing signal matches the feature parameter or model parameter of the sensed object, transmitting the measurement quantity.

79. A processor readable storage medium, wherein the processor readable storage medium stores a computer program that cause a processor to perform the method of any of claims 1 to 26.
